# EUROPEAN PATENT APPLICATION

(11) **EP 4 697 167 A1**
(43) Date of publication of application: **18.02.2026**
(21) Application number: 24871051.9
(22) Date of filing: 27.09.2024
(51) Int. Cl.: G06F 9/451

(54) **WALLPAPER DISPLAY METHOD AND APPARATUS, ELECTRONIC DEVICE, AND STORAGE MEDIUM**

(30) Priority: 28.09.2023 CN 202311294883
(71) Applicant: Huawei Technologies Co., Ltd., Shenzhen, Guangdong 518129 (CN)
(72) Inventor: ZHANG, Chao, Shenzhen, Guangdong 518129 (CN); ZHENG, Jiangzhen, Shenzhen, Guangdong 518129 (CN); JIANG, Shunji, Shenzhen, Guangdong 518129 (CN); XIONG, Zhangliang, Shenzhen, Guangdong 518129 (CN); DING, Ning, Shenzhen, Guangdong 518129 (CN); YANG, Ouya, Shenzhen, Guangdong 518129 (CN)
(74) Representative: Maiwald GmbH
(86) International application number: PCT/CN2024/122045
(87) International publication number: WO 2025/067516

(57) **Abstract**

This application is applicable to the field of display technologies, and provides a wallpaper display method and apparatus, an electronic device, and a storage medium. The method includes: displaying a first wallpaper when a first wallpaper display event is detected, where the first wallpaper includes a first foreground object and a first background picture; and displaying a second wallpaper when a second wallpaper display event is detected, where the second wallpaper includes a second foreground object and a second background picture, features of the first foreground object and the second foreground object are the same in a first feature dimension, and the first background picture is different from the second background picture. In the technical solutions provided in this application, foreground objects of displayed wallpapers maintain a same feature, and background pictures are different, to avoid a great difference between wallpapers after each change. This can improve interest of a wallpaper on an interface while improving interface consistency, thereby improving user experience.

## Description

This application claims priority to Chinese Patent Application No. 202311294883.7, filed with the China National Intellectual Property Administration on September 28, 2023 and entitled "WALLPAPER DISPLAY METHOD AND APPARATUS, ELECTRONIC DEVICE, AND STORAGE MEDIUM", which is incorporated herein by reference in its entirety.

### TECHNICAL FIELD

This application relates to the field of display technologies, and in particular, to a wallpaper display method and apparatus, an electronic device, and a storage medium.

### BACKGROUND

With continuous development of electronic device technologies, an electronic device has been widely used in various scenarios of daily work and life of a user, and the user needs to use the electronic device for a long time every day. Therefore, how to improve interest and aesthetics of the electronic device becomes one of key factors that affect user experience. The user may set wallpapers on some interfaces of the electronic device based on a preference of the user, for example, set a preferred wallpaper as a wallpaper on a lock screen, so that when the lock screen is turned on, the wallpaper that meets personalized aesthetics of the user may be viewed.

In an existing wallpaper management technology, to improve interest of wallpapers, a wallpaper that is set on a preset interface may be randomly switched based on a plurality of wallpaper images stored in a gallery. In this way, the user does not need to manually switch the wallpaper on the interface, and the interest can also be improved to some extent. However, a correlation between the wallpaper images stored in the gallery is low, reducing consistency of interface display at different moments. In addition, the wallpaper images stored in the gallery may not meet an aesthetic preference of the user, and recommendation accuracy is low, affecting user experience.

### SUMMARY

Embodiments of this application provide a wallpaper display method and apparatus, an electronic device, and a computer-readable storage medium, to resolve a problem that in an existing wallpaper management technology, when wallpaper switching is performed on an interface based on wallpaper images in a gallery, a correlation between the wallpaper images is low, and consequently, interface display at different moments is inconsistent.

According to a first aspect, an embodiment of this application provides a wallpaper display method. The method includes:
displaying a first wallpaper when a first wallpaper display event is detected, where the first wallpaper includes a first foreground object and a first background picture; and
displaying a second wallpaper when a second wallpaper display event is detected, where the second wallpaper includes a second foreground object and a second background picture, a first feature of the first foreground object is the same as a second feature of the second foreground object, the first feature and the second feature are features in a first feature dimension, and the first background picture is different from the second background picture. The first wallpaper and the second wallpaper are wallpapers generated based on a same preset image, so that wallpapers displayed in different wallpaper display events have similar image composition, thereby improving interface consistency.

Implementation of this embodiment of this application has the following beneficial effect: An electronic device may display different wallpapers when responding to wallpaper display events at different moments, and foreground objects of different wallpapers have a same feature in the first feature dimension. Therefore, when a wallpaper on an interface on the electronic device is dynamically adjusted, consistency between interfaces at different moments can be maintained. In comparison with an existing wallpaper management method, in this embodiment of this application, wallpapers displayed on a same interface at different moments do not affect consistency of the interface while foreground objects in the wallpapers displayed at different moments maintain the same feature in the first feature dimension. Therefore, it can be ensured that wallpapers obtained through switching have similar foreground objects, a large difference between display effect of the interfaces after changing is avoided, and interest of the wallpaper on the interface can be improved. This improves user experience.

In a possible implementation of the first aspect, the first feature dimension includes a facial feature dimension and/or a subject form dimension. This can ensure consistency of the displayed wallpapers.

In a possible implementation of the first aspect, the first foreground object and the second foreground object are generated based on a third foreground object in a same preset image.

In a possible implementation of the first aspect, the third foreground object is a person or an animal in the preset image; and a facial image of the first foreground object and a facial image of the second foreground object are generated based on a facial image of the third foreground object.

In a possible implementation of the first aspect, a subject form of the first foreground object and a subject form of the second foreground object are determined based on a subject form of the third foreground object.

A third feature of the first foreground object is different from a fourth feature of the second foreground object, the third feature and the fourth feature are features in a second feature dimension, and the second feature dimension is a feature dimension different from the first feature dimension.

In a possible implementation of the first aspect, the second feature dimension includes at least one of a clothing dimension, a hairstyle dimension, and an expression dimension.

In a possible implementation of the first aspect, an image style type of the first wallpaper is the same as an image style type of the second wallpaper, so that displayed wallpapers have a same style, thereby improving display uniformity.

In a possible implementation of the first aspect, the first wallpaper and the second wallpaper are wallpapers that are generated based on a first image style type and that have the same image style type.

In a possible implementation of the first aspect, before displaying the first wallpaper when the first wallpaper display event is detected, the method further includes:
generating the first wallpaper based on the preset image and the first image style type; and
before displaying the second wallpaper when the second wallpaper display event is detected, the method further includes:
   generating the second wallpaper based on the preset image and the first image style type. In this way, the generated wallpaper can be associated with a wallpaper that is set by the user, thereby improving consistency of a display interface.

In a possible implementation of the first aspect, generating the first wallpaper based on the preset image and the image style type, and generating the second wallpaper based on the preset image and the first image style type includes:
generating the first wallpaper and the second wallpaper based on the preset image and the first image style type in response to an operation of setting the preset image as a wallpaper. The wallpaper is pre-generated when the wallpaper is set, so that smoothness of subsequent display can be improved.

In a possible implementation of the first aspect, after generating the first wallpaper and the second wallpaper based on the preset image and the first image style type in response to the operation of setting the preset image as the wallpaper, the method further includes:
if a scene change event is detected, generating a third wallpaper based on scene information corresponding to the scene change event, the preset image, and the first image style type; and
displaying the third wallpaper when a third wallpaper display event is detected. When it is detected that a scenario changes, a wallpaper related to the scenario can be pre-generated, thereby improving association between the wallpaper and the scenario when the wallpaper is subsequently displayed.

In a possible implementation of the first aspect, generating the first wallpaper and the second wallpaper based on the preset image and the first image style type includes:
generating the first wallpaper based on the preset image and the first image style type in response to the first wallpaper display event; and
generating the second wallpaper based on the preset image and the first image style type in response to the second wallpaper display event.

In a possible implementation of the first aspect, generating the first wallpaper based on the preset image and the first image style type in response to the first wallpaper display event includes:
in response to the first wallpaper display event, generating the first wallpaper based on the preset image, the first image style type, and scene information corresponding to the first wallpaper display event. The scene information corresponding to the first wallpaper display event is scene information upon occurring of the first wallpaper display event. The scene information is obtained only when the wallpaper display event is detected, so that timeliness of the scene information can be improved, and then association between the wallpaper and the scenario is improved.

In a possible implementation of the first aspect, generating the second wallpaper based on the preset image and the first image style type in response to the second wallpaper display event includes:
in response to the second wallpaper display event, generating the second wallpaper based on the preset image, the first image style type, and scene information corresponding to the second wallpaper display event. The scene information corresponding to the second wallpaper display event is scene information upon occurring of the second wallpaper display event.

In a possible implementation of the first aspect, the scene information includes at least one of time information, location information, weather information, a motion status, and user status information.

In a possible implementation of the first aspect, generating the first wallpaper based on the preset image and the image style type includes:
determining the first feature based on the preset image; and
generating the first wallpaper based on the image style type and the first feature, where the first object in the generated first wallpaper has the first feature.

In a possible implementation of the first aspect, the preset image includes a third foreground object, the third foreground object is a person or an animal, and determining the first feature based on the preset image includes:
extracting a first facial feature of the third foreground object in the preset image as the first feature; or
obtaining, from a pre-trained face library, a second facial feature corresponding to the third foreground object included in the preset image, and obtaining the first feature based on the second facial feature and a first facial feature in the preset image.

In a possible implementation of the first aspect, the preset image includes a third foreground object, the third foreground object is a person or an animal, and determining the first feature based on the preset image includes:
determining the first feature based on skeletal posture information of the third foreground object in the preset image.

In a possible implementation of the first aspect, determining the first feature based on the skeletal posture information of the third foreground object in the preset image includes:
determining the first feature based on the skeletal posture information and at least one of contour information and depth information of the third foreground object in the preset image. The contour information is obtained by processing the third foreground object in the preset image by using an edge identification algorithm. The depth information is obtained by processing the third foreground object in the preset image by using a depth identification algorithm.

In a possible implementation of the first aspect, before displaying the first wallpaper and the second wallpaper, the method further includes:
sending an image generation indication to a server in response to a first user operation, where the image generation indication includes the preset image; and
receiving a plurality of images that are generated based on the preset image and sent by the server, and adding at least two of the plurality of images to a wallpaper library, where the at least two images includes the first wallpaper and the second wallpaper.

In a possible implementation of the first aspect, the preset image includes a third foreground object, the image generation indication further includes description information of the third foreground object, and the description information of the third foreground object is used by the server to determine an image style type corresponding to the plurality of to-be-generated images.

In a possible implementation of the first aspect, the image generation indication further includes scene information corresponding to a user upon triggering of the image generation indication, and the scene information is used by the server to generate the plurality of images.

In a possible implementation of the first aspect, the image style type includes at least one of a dopamine style, an ancient style, a retro style, a cartoon style, a light and shadow photography style, and an underwater style.

In a possible implementation of the first aspect, the first wallpaper is generated based on scene information upon generation of the first wallpaper, and/or the second wallpaper is generated based on scene information upon generation of the second wallpaper.

In a possible implementation of the first aspect, the scene information includes at least one of time information, location information, weather information, a motion status, and user status information.

In a possible implementation of the first aspect, the first wallpaper display event and the second wallpaper display event are specifically either screen-on event or incoming call event.

In a possible implementation of the first aspect, if the first wallpaper display event and the second wallpaper display event are screen-on events, the preset image is a preset wallpaper that is set on a display. The screen-on event includes one of a first screen-on event triggered by a tap operation and a second screen-on event triggered by a screen folding change.

In a possible implementation of the first aspect, if the first wallpaper display event and the second wallpaper display event are incoming call events, the preset image is a contact image corresponding to a contact of the incoming call events.

In a possible implementation of the first aspect, the first wallpaper display event is a first screen-on event triggered by a tap operation, and before displaying the first wallpaper when the first wallpaper display event is detected, the method further includes:
displaying the preset image in an always-on display state; and
displaying the first wallpaper when the first wallpaper display event is detected includes:
   displaying a wallpaper switching animation when the first wallpaper display event is detected, and displaying the first wallpaper when the wallpaper switching animation ends, where the wallpaper switching animation is generated based on the preset image and the first wallpaper. This improves smoothness of wallpaper display.

In a possible implementation of the first aspect, before displaying the wallpaper switching animation when the first wallpaper display event is detected, and displaying the first wallpaper when the wallpaper switching animation ends, the method further includes:
if a posture of the third foreground object in the preset image is different from a posture of the first foreground object, determining a posture animation parameter based on the posture of the third foreground object and the posture of the first foreground object; and
generating the wallpaper switching animation based on the posture animation parameter. This improves smoothness of the wallpaper display.

According to a second aspect, an embodiment of this application provides a wallpaper display apparatus, including:
a first display unit, configured to display a first wallpaper when a first wallpaper display event is detected, where the first wallpaper includes a first foreground object and a first background picture; and
a second display unit, configured to display a second wallpaper when a second wallpaper display event is detected, where the second wallpaper includes a second foreground object and a second background picture, a first feature of the first foreground object is the same as a second feature of the second foreground object, the first feature and the second feature are features in a first feature dimension, and the first background picture is different from the second background picture.

In a possible implementation of the second aspect, the first feature dimension includes a facial feature dimension and/or a subject form dimension.

In a possible implementation of the second aspect, the first foreground object and the second foreground object are generated based on a third foreground object in a same preset image.

In a possible implementation of the second aspect, the third foreground object is a person or an animal in the preset image; and a facial image of the first foreground object and a facial image of the second foreground object are generated based on a facial image of the third foreground object.

In a possible implementation of the second aspect, a subject form of the first foreground object and a subject form of the second foreground object are determined based on a subject form of the third foreground object.

In a possible implementation of the second aspect, a third feature of the first foreground object is different from a fourth feature of the second foreground object, the third feature and the fourth feature are features in a second feature dimension, and the second feature dimension is a feature dimension different from the first feature dimension.

In a possible implementation of the second aspect, the second feature dimension includes at least one of a clothing dimension, a hairstyle dimension, and an expression dimension.

In a possible implementation of the second aspect, an image style type of the first wallpaper is the same as an image style type of the second wallpaper.

In a possible implementation of the second aspect, the first wallpaper and the second wallpaper are wallpapers that are generated based on a first image style type and that have the same image style type.

In a possible implementation of the second aspect, the apparatus further includes:
a first wallpaper generation unit, configured to generate the first wallpaper based on the preset image and the first image style type; and
a second wallpaper generation unit, configured to generate the second wallpaper based on the preset image and the first image style type.

In a possible implementation of the second aspect, the apparatus further includes:
a wallpaper setting unit, configured to: generate the first wallpaper and the second wallpaper based on the preset image and the first image style type in response to an operation of setting the preset image as a wallpaper.

In a possible implementation of the second aspect, the apparatus further includes:
a scenario triggering unit, configured to: if a scene change event is detected, generate a third wallpaper based on scene information corresponding to the scene change event, the preset image, and the first image style type; and
a third display unit, configured to display the third wallpaper when a third wallpaper display event is detected.

In a possible implementation of the second aspect, the wallpaper generation unit includes:
a first display generation unit, configured to: generate the first wallpaper based on the preset image and the first image style type in response to the first wallpaper display event; and
a second display generation unit, configured to: generate the second wallpaper based on the preset image and the first image style type in response to the second wallpaper display event.

In a possible implementation of the second aspect, the first display generation unit is specifically configured to: in response to the first wallpaper display event, generate the first wallpaper based on the preset image, the first image style type, and scene information corresponding to the first wallpaper display event.

In a possible implementation of the second aspect, the second display generation unit is specifically configured to: in response to the second wallpaper display event, generate the second wallpaper based on the preset image, the first image style type, and scene information corresponding to the second wallpaper display event.

In a possible implementation of the second aspect, the scene information includes at least one of time information, location information, weather information, a motion status, and user status information.

In a possible implementation of the second aspect, the wallpaper generation unit includes:
a first feature determining unit, configured to determine the first feature based on the preset image; and
a first feature fusion unit, configured to generate the first wallpaper based on the image style type and the first feature, where the first object in the generated first wallpaper has the first feature.

In a possible implementation of the second aspect, the preset image includes a third foreground object, the third foreground object is a person or an animal, and the first feature determining unit includes:
a face replacement unit, configured to extract a first facial feature of the third foreground object in the preset image as the first feature; or
a face library extracting unit, configured to: obtain, from a pre-trained face library, a second facial feature corresponding to the third foreground object included in the preset image, and obtain the first feature based on the second facial feature and a first facial feature in the preset image.

In a possible implementation of the second aspect, the preset image includes a third foreground object, the third foreground object is a person or an animal, and the first feature determining unit includes:
a skeletal posture determining unit, configured to determine the first feature based on skeletal posture information of the third foreground object in the preset image.

In a possible implementation of the second aspect, the skeletal posture determining unit is specifically configured to determine the first feature based on the skeletal posture information and at least one of contour information and depth information of the third foreground object in the preset image.

In a possible implementation of the second aspect, the apparatus further includes:
an image generation indication sending unit, configured to send an image generation indication to a server in response to a first user operation, where the image generation indication includes the preset image; and
an image receiving unit, configured to: receive a plurality of images that are generated based on the preset image and sent by the server, and add at least two of the plurality of images to a wallpaper library, where the at least two images include the first wallpaper and the second wallpaper.

In a possible implementation of the second aspect, the preset image includes a third foreground object, the image generation indication further includes description information of the third foreground object, and the description information of the third foreground object is used by the server to determine an image style type corresponding to the plurality of to-be-generated images.

In a possible implementation of the second aspect, the image generation indication further includes scene information corresponding to a user upon triggering of the image generation indication, and the scene information is used by the server to generate the plurality of images.

In a possible implementation of the second aspect, the image style type includes at least one of a dopamine style, an ancient style, a retro style, a cartoon style, a light and shadow photography style, and an underwater style.

In a possible implementation of the second aspect, the first wallpaper is generated based on scene information upon generation of the first wallpaper, and/or the second wallpaper is generated based on scene information upon generation of the second wallpaper.

In a possible implementation of the second aspect, the scene information includes at least one of time information, location information, weather information, a motion status, and user status information.

In a possible implementation of the second aspect, the first wallpaper display event and the second wallpaper display event are specifically either screen-on event or incoming call event.

In a possible implementation of the second aspect, if the first wallpaper display event and the second wallpaper display event are screen-on events, the preset image is a preset wallpaper that is set on a display.

In a possible implementation of the second aspect, if the first wallpaper display event and the second wallpaper display event are incoming call events, the preset image is a contact image corresponding to a contact of the incoming call events.

In a possible implementation of the second aspect, the first wallpaper display event is a first screen-on event triggered by a tap operation, and the apparatus further includes:
an always-on display unit, configured to display the preset image in an always-on display state; and
the first display unit includes:
   an animation display unit, configured to: display a wallpaper switching animation when the first wallpaper display event is detected, and display the first wallpaper when the wallpaper switching animation ends, where the wallpaper switching animation is generated based on the preset image and the first wallpaper.

In a possible implementation of the second aspect, the apparatus further includes:
a posture animation parameter determining unit, configured to: if a posture of the third foreground object in the preset image is different from a posture of the first foreground object, determine a posture animation parameter based on the posture of the third foreground object and the posture of the first foreground object; and
a posture animation generation unit, configured to generate the wallpaper switching animation based on the posture animation parameter.

According to a third aspect, an embodiment of this application provides a wallpaper display method. The method includes:
displaying a first wallpaper when a first wallpaper display event is detected, where the first wallpaper includes a first object; and
displaying a second wallpaper when a second wallpaper display event is detected, where the second wallpaper includes a second object.

The first object and the second object are generated based on a third object in a same preset image.

In a first possible implementation of the third aspect, the third object is at least one of a person, an animal, a plant, a mountain, or a water flow.

With reference to the first possible implementation of the third aspect, in a second possible implementation of the third aspect, the third subject is a person or an animal in the preset image, and a facial image of the first subject and a facial image of the second subject are generated based on a facial image of the third subject.

With reference to the first possible implementation of the third aspect, in a third possible implementation of the third aspect, a subject form of the first object and a subject form of the second object are determined based on a subject form of the third object.

With reference to the second or third possible implementation of the third aspect, in a fourth possible implementation of the third aspect, a first feature of the first object is the same as a second feature of the second object, and the first feature and the second feature are features in a first feature dimension.

With reference to the fourth possible implementation of the third aspect, in a fifth possible implementation of the third aspect, the first feature dimension includes a facial feature dimension and/or a subject form dimension.

With reference to the fourth possible implementation of the third aspect, in a sixth possible implementation of the third aspect, a third feature of the first object is different from a fourth feature of the second object, the third feature and the fourth feature are features in a second feature dimension, and the second feature dimension is a feature dimension different from the first feature dimension.

With reference to the sixth possible implementation of the third aspect, in a seventh possible implementation of the third aspect, the second feature dimension includes at least one of a clothing dimension, a hairstyle dimension, and an expression dimension.

In an eighth possible implementation of the third aspect, the first object is a foreground object in the first wallpaper, the second object is a foreground object in the second wallpaper, and a background picture in the first wallpaper is different from a background picture in the second wallpaper.

With reference to any one of the possible implementations of the third aspect, in a ninth possible implementation of the third aspect, an image style type of the first wallpaper is the same as an image style type of the second wallpaper.

With reference to the ninth possible implementation of the third aspect, in a tenth possible implementation of the third aspect, the first wallpaper and the second wallpaper are wallpapers that are generated based on a first image style type and that have the same image style type.

With reference to the ninth possible implementation of the third aspect, in an eleventh possible implementation of the third aspect, the image style type includes at least one of a dopamine style, an ancient style, a retro style, a cartoon style, a light and shadow photography style, and an underwater style.

With reference to the tenth possible implementation of the third aspect, in a twelfth possible implementation of the third aspect, before displaying the first wallpaper when the first wallpaper display event is detected, the method further includes:
generating the first wallpaper based on the preset image and the first image style type; and
before displaying the second wallpaper when the second wallpaper display event is detected, the method further includes:
   generating the second wallpaper based on the preset image and the first image style type.

With reference to the twelfth possible implementation of the third aspect, in a thirteenth possible implementation of the third aspect, generating the first wallpaper based on the preset image and the first image style type, and generating the second wallpaper based on the preset image and the first image style type includes:
generating the first wallpaper and the second wallpaper based on the preset image and the first image style type in response to an operation of setting the preset image as a wallpaper.

With reference to the thirteenth possible implementation of the third aspect, in a fourteenth possible implementation of the third aspect, after generating the first wallpaper and the second wallpaper based on the preset image and the first image style type in response to the operation of setting the preset image as the wallpaper, the method further includes:
if a scene change event is detected, generating a third wallpaper based on scene information corresponding to the scene change event, the preset image, and the first image style type; and
displaying the third wallpaper when a third wallpaper display event is detected.

With reference to the twelfth possible implementation of the third aspect, in a fifteenth possible implementation of the third aspect, generating the first wallpaper and the second wallpaper based on the preset image and the first image style type includes:
generating the first wallpaper based on the preset image and the first image style type in response to the first wallpaper display event; and
generating the second wallpaper based on the preset image and the first image style type in response to the second wallpaper display event.

With reference to the fifteenth possible implementation of the third aspect, in a sixteenth possible implementation of the third aspect, generating the first wallpaper based on the preset image and the first image style type in response to the first wallpaper display event includes:
in response to the first wallpaper display event, generating the first wallpaper based on the preset image, the first image style type, and scene information corresponding to the first wallpaper display event.

With reference to the fifteenth or sixteenth possible implementation of the third aspect, in a seventeenth possible implementation of the third aspect, generating the second wallpaper based on the preset image and the first image style type in response to the second wallpaper display event includes:
in response to the second wallpaper display event, generating the second wallpaper based on the preset image, the first image style type, and scene information corresponding to the second wallpaper display event.

With reference to any one of the twelfth to seventeenth possible implementations of the third aspect, in an eighteenth possible implementation of the third aspect, generating the first wallpaper based on the preset image and the first image style type includes:
determining the first feature based on the preset image; and
generating the first wallpaper based on the first image style type and the first feature, where the first object in the generated first wallpaper has the first feature.

With reference to the eighteenth possible implementation of the third aspect, in a nineteenth possible implementation of the third aspect, the third object is a person or an animal in the preset image, and determining the first feature based on the preset image includes:
extracting a first facial feature of the third object in the preset image as the first feature; or
obtaining, from a pre-trained face library, a second facial feature corresponding to the third object included in the preset image, and obtaining the first feature based on the second facial feature and a first facial feature in the preset image.

With reference to the eighteenth possible implementation of the third aspect, in a twentieth possible implementation of the third aspect, the third object is a person or an animal in the preset image, and determining the first feature based on the preset image includes:
determining the first feature based on skeletal posture information of the third object in the preset image.

With reference to the twentieth possible implementation of the third aspect, in a twenty-first possible implementation of the third aspect, determining the first feature based on skeletal posture information of the third object in the preset image includes:
determining the first feature based on the skeletal posture information and at least one of contour information and depth information of the third object in the preset image.

With reference to the ninth possible implementation of the third aspect, in a twenty-second possible implementation of the third aspect, before displaying the first wallpaper and the second wallpaper, the method further includes:
sending an image generation indication to a server in response to a first user operation, where the image generation indication includes the preset image; and
receiving a plurality of images sent by the server, and adding at least two of the plurality of images to a wallpaper library, where the at least two images includes the first wallpaper and the second wallpaper.

With reference to the twenty-second possible implementation of the third aspect, in a twenty-third possible implementation of the third aspect, the image generation indication further includes description information of the third object, and the description information of the third object is used by the server to determine an image style type corresponding to the plurality of to-be-generated images.

With reference to the twenty-second possible implementation of the third aspect, in a twenty-fourth possible implementation of the third aspect, the image generation indication further includes scene information, and the scene information is used by the server to generate the plurality of images.

With reference to any possible implementation of the third aspect, in a twenty-fifth possible implementation of the third aspect, the first wallpaper is generated based on scene information upon generation of the first wallpaper, and/or the second wallpaper is generated based on scene information upon generation of the second wallpaper.

With reference to the twenty-fifth possible implementation of the third aspect, in a twenty-sixth possible implementation of the third aspect, the scene information includes at least one of time information, location information, weather information, a motion status, and user status information.

With reference to any possible implementation of the third aspect, in a twenty-seventh possible implementation of the third aspect, the first wallpaper display event and the second wallpaper display event are specifically either screen-on event or incoming call event.

With reference to the twenty-seventh possible implementation of the third aspect, in a twenty-eighth possible implementation of the third aspect, if the first wallpaper display event and the second wallpaper display event are screen-on events, the preset image is a preset wallpaper that is set on a display.

With reference to the twenty-seventh possible implementation of the third aspect, in a twenty-ninth possible implementation of the third aspect, if the first wallpaper display event and the second wallpaper display event are incoming call events, the preset image is a contact image corresponding to a contact of the incoming call events.

With reference to any possible implementation of the third aspect, in a thirtieth possible implementation of the third aspect, the first wallpaper display event is the screen-on event, and before displaying the first wallpaper when the first wallpaper display event is detected, the method further includes:
displaying the preset image in an always-on display state; and
displaying the first wallpaper when the first wallpaper display event is detected includes:
   displaying a wallpaper switching animation when the first wallpaper display event is detected, and displaying the first wallpaper when the wallpaper switching animation ends, where the wallpaper switching animation is generated based on the preset image and the first wallpaper.

With reference to the thirtieth possible implementation of the third aspect, in a thirty-first possible implementation of the third aspect, before displaying the wallpaper switching animation when the first wallpaper display event is detected, and displaying the first wallpaper when the wallpaper switching animation ends, the method further includes:
if a posture of the third object in the preset image is different from a posture of the first object, determining a posture animation parameter based on the posture of the third object and the posture of the first object; and
generating the wallpaper switching animation based on the posture animation parameter.

According to a fourth aspect, an embodiment of this application provides an electronic device, including a memory, a processor, and a program stored in the memory. When executing the program, the processor implements the wallpaper display method according to any one of the first aspect.

According to a fifth aspect, an embodiment of this application provides a readable storage medium. The readable storage medium stores a program, and when the program is executed by a processor, the wallpaper display method according to any one of the first aspect is implemented.

According to a sixth aspect, an embodiment of this application provides a program product. When the program product is run on a device, the device is enabled to perform the wallpaper display method according to any one of the first aspect.

According to a seventh aspect, an embodiment of this application provides a chip system, including a processor. The processor is coupled to a memory, and the processor executes a program stored in the memory, to implement the wallpaper display method according to any one of the first aspect.

According to an eighth aspect, an embodiment of this application provides an image processing system. The system includes an electronic device and a server.

The electronic device is configured to send an image generation indication to the server in response to a first user operation. The image generation indication includes the preset image.

The server is configured to: generate a plurality of images based on the preset image, and send the plurality of images to the electronic device.

The electronic device is further configured to: receive the plurality of images sent by the server, and add at least two of the plurality of images to a wallpaper library, where the at least two images include a first wallpaper and a second wallpaper, the first wallpaper includes a first foreground object and a first background picture, the second wallpaper includes a second foreground object and a second background picture, a first feature of the first foreground object is the same as a second feature of the second foreground object, the first feature and the second feature are features in a first feature dimension, and the first background picture is different from the second background picture.

The electronic device is further configured to display the first wallpaper when a first wallpaper display event is detected.

The electronic device is further configured to display the second wallpaper when a second wallpaper display event is detected.

In a possible implementation of the eighth aspect, the preset image includes a third foreground object, the image generation indication further includes description information of the third foreground object, and the description information of the third foreground object is used by the server to determine an image style type corresponding to the plurality of to-be-generated images.

In a possible implementation of the eighth aspect, the image generation indication further includes scene information corresponding to a user upon triggering of the image generation indication, and the scene information is used by the server to generate the plurality of images.

It may be understood that, for beneficial effect of the second aspect to the eighth aspect, refer to related descriptions in the first aspect. Details are not described herein again.

### BRIEF DESCRIPTION OF DRAWINGS

FIG. 1 is a diagram of a structure of an electronic device according to this application;
FIG. 2 is a block diagram of a software structure of an electronic device according to an embodiment of this application;
FIG. 3(a) and FIG. 3(b) are a diagram of existing wallpaper switching;
FIG. 4 is an implementation flowchart of a setting phase in a wallpaper display method according to an embodiment of this application;
FIG. 5(a) and FIG. 5(b) are a diagram of setting an image style type according to an embodiment of this application;
FIG. 6 is a diagram of an interface according to an embodiment of this application;
FIG. 7 is a diagram of generating a new wallpaper when a foreground object is a portrait according to an embodiment of this application;
FIG. 8 is a diagram of generating a new wallpaper when a foreground object is an animal according to an embodiment of this application;
FIG. 9 is a diagram of generating a new wallpaper when a foreground object is a plant according to an embodiment of this application;
FIG. 10(a) to FIG. 10(c) are a diagram of a plurality of different generated wallpapers according to an embodiment of this application;
FIG. 11(a) and FIG. 11(b) are a diagram of generating a new wallpaper in a face replacement manner according to an embodiment of this application;
FIG. 12(a) to FIG. 12(c) are a diagram of generating a new wallpaper based on a face library according to an embodiment of this application;
FIG. 13 is a diagram of extracting a subject form feature of a foreground object according to an embodiment of this application;
FIG. 14 is a specific implementation flowchart of generating a wallpaper with a specified image style type according to an embodiment of this application;
FIG. 15 is an implementation flowchart of a display phase in a wallpaper display method according to an embodiment of this application;
FIG. 16(a) to FIG. 16(d) are a diagram of a screen-on process triggered by a tap operation according to an embodiment of this application;
FIG. 17 is a diagram of a folding status change of a foldable device according to an embodiment of this application;
FIG. 18(a) and FIG. 18(b) are a diagram of an incoming call interface according to an embodiment of this application;
FIG. 19 is a diagram of background editing-based wallpaper switching according to an embodiment of this application;
FIG. 20 is a diagram of displaying a switching animation according to an embodiment of this application;
FIG. 21 is a diagram of a wallpaper switching animation according to an embodiment of this application;
FIG. 22 is an implementation flowchart of simultaneously performing style editing on a foreground object and a background picture according to an embodiment of this application;
FIG. 23 is a diagram of generating a switching animation according to an embodiment of this application;
FIG. 24 is a block diagram of a structure of a wallpaper display apparatus according to an embodiment of this application; and
FIG. 25 is a diagram of a structure of an electronic device according to an embodiment of this application.

### DESCRIPTION OF EMBODIMENTS

In the following description, for illustration instead of limitation, specific details such as a specific system structure and technology are provided, so as to thoroughly understand embodiments of this application. However, persons skilled in the art should understand that this application may also be implemented in other embodiments without these specific details. In other cases, detailed descriptions of a well-known system, apparatus, circuit, and method are omitted, so as not to obscure the description of this application with unnecessary detail.

It should be understood that the term "include" when used in the specification of this application and the appended claims indicates the presence of the described features, wholes, steps, operations, elements, and/or components, but does not preclude the presence or addition of one or more other features, wholes, steps, operations, elements, components, and/or collections thereof.

It should also be understood that the term "and/or" as used in the specification of this application and the appended claims refers to any combination of one or more of associated items and all possible combinations, and includes such combinations.

As used in the specification of this application and the appended claims, the term "if" may be interpreted as "when" or "once" or "in response to determining" or "in response to detecting" depending on the context. Similarly, the phrase "if it is determined" or "if [described condition or event] is detected" may be interpreted, depending on the context, to mean "once determined" or "in response to determining" or "once [described condition or event] is detected" or "in response to detecting [described condition or event]".

In addition, in the description of the specification of this application and the appended claims, the terms "first", "second", "third", and the like are merely used for distinguishing descriptions, but cannot be understood as indicating or implying relative importance.

Reference to "one embodiment" or "some embodiments" described in the specification of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The wallpaper display method provided in embodiments of this application may be applied to an electronic device like a mobile phone, a tablet computer, an augmented reality (augmented reality, AR)/virtual reality (virtual reality, VR) display device, a notebook computer, an ultra-mobile personal computer (ultra-mobile personal computer, UMPC), a netbook, a personal digital assistant (personal digital assistant, PDA), and the like. In particular, the wallpaper display method may be applied to an electronic device configured with a display, or an electronic device connected to an external display. A wallpaper is set on the display, and the wallpaper on the display may be switched by using the wallpaper display method, to implement automatic update on an interface wallpaper. A specific type of the electronic device is not limited in embodiments of this application.

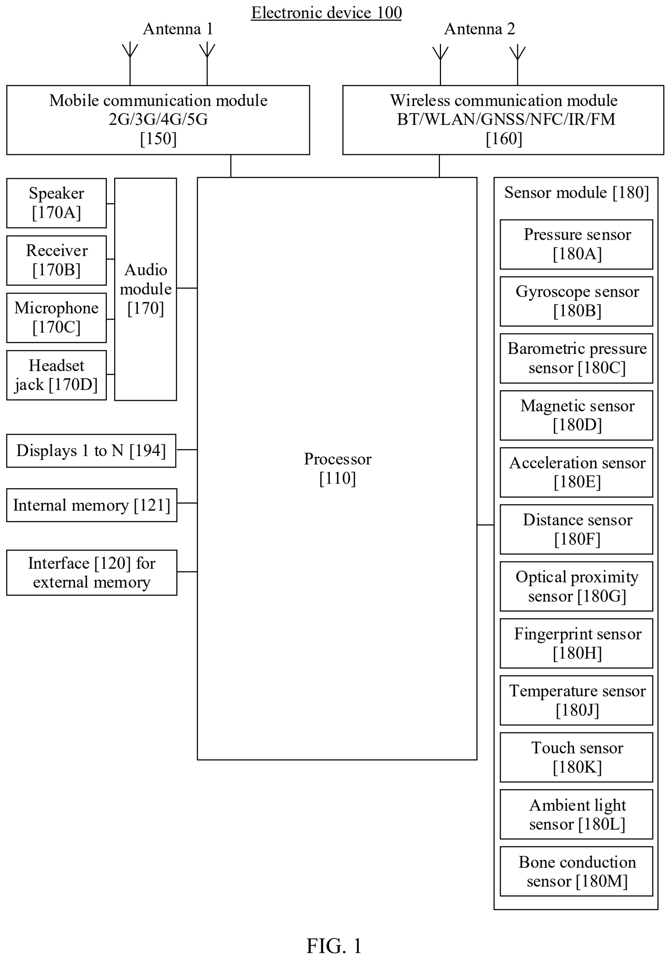

FIG. 1 is a diagram of a structure of an electronic device 100.

The electronic device 100 may include a processor 110, an interface 120 for external memory, an internal memory 121, an antenna 1, an antenna 2, a mobile communication module 150, a wireless communication module 160, a sensor module 180, a button, a display 194, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. The electronic device may process a preset wallpaper on an interface by using the GPU in the processor 110, to generate a new wallpaper.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency. The memory may be configured to store image data in a gallery, and determine facial features of different objects based on the image data in the gallery.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a graphics processing unit, and is connected to the display 194 and the application processor. The GPU is configured to: perform mathematical and geometric computation, and render an image. The processor 110 may include one or more GPUs that execute program instructions to generate or change display information. It should be noted that the GPU may control, by using the wallpaper display method provided in this embodiment, an interface displayed on the display 194, for example, change a wallpaper displayed on the interface. In some implementation scenarios, animation display of the interface on the display 194 may also be output by using the GPU.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may include a touch panel and another input device. The display 194 may be associated with one or more storage units, and the storage unit is configured to buffer image data displayed on the display 194.

The NPU is a neural-network (neural-network, NN) computing processor, and quickly processes input information with reference to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding. In this embodiment, a new wallpaper having a preset image style type may be generated by using the NPU.

The interface 120 for external memory may be used to connect to an external memory card, for example, a micro SD card, to extend a storage capability of the electronic device 100. The external memory card communicates with the processor 110 through the interface 120 for external memory, to implement a data storage function. For example, files such as music and videos are stored in the external memory card. Similarly, the cross-device control method in this embodiment of this application may manage memory space in the external memory card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, and may further include a nonvolatile memory, for example, at least one magnetic disk storage device, a flash storage device, and a universal flash storage (universal flash storage, UFS). The processor 110 runs instructions stored in the internal memory 121 and/or instructions stored in the memory disposed in the processor, to perform various function applications and data processing of the electronic device 100. Similarly, the cross-device control method in this embodiment of this application may manage memory space in the internal memory.

The electronic device 100 may implement an audio function, for example, music playing and recording, through the audio module 170, the speaker 170A, the receiver 170B, the microphone 170C, the headset jack 170D, the application processor, and the like.

The pressure sensor 180A is configured to sense a pressure signal, and can convert the pressure signal into an electrical signal. In some embodiments, the pressure sensor 180A may be disposed on the display 194. For example, the electronic device may obtain a weight of a user by using the pressure sensor 180A. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation based on the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a messages application icon, an instruction for viewing an SMS message is performed. When a touch operation whose touch operation intensity is greater than or equal to the first pressure threshold is performed on the messages application icon, an instruction for creating a new SMS message is performed. The pressure sensor 180A may be configured to receive a tap operation initiated by the user on the display 194, to determine whether the display 194 needs to be turned on.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario. In this embodiment, the electronic device may collect a motion posture of the user in a motion process by using the gyroscope sensor 180B, to generate corresponding motion data. The motion data may be used to generate image style information.

The barometric pressure sensor 180C is configured to measure barometric pressure. In some embodiments, the electronic device 100 calculates an altitude by using the barometric pressure measured by the barometric pressure sensor 180C, to assist in positioning and navigation.

The magnetic sensor 180D includes a Hall sensor. The electronic device 100 may detect opening and closing of a leather case by using the magnetic sensor 180D. In some embodiments, when the electronic device 100 is a clamshell phone, the electronic device 100 may detect opening and closing of a flip cover based on the magnetic sensor 180D. Further, a feature like automatic unlocking of the flip cover is set based on a detected opening or closing state of the leather case or a detected opening or closing state of the flip cover.

The acceleration sensor 180E may detect accelerations of the electronic device 100 in various directions (usually on three axes). When the electronic device 100 is still, a magnitude and a direction of gravity may be detected. The acceleration sensor 180E may be further configured to identify a posture of the electronic device, and is used in an application, for example, switching between a landscape mode and a portrait mode or a pedometer. In this embodiment, the electronic device may collect a motion speed of the user in a motion process by using the gyroscope sensor 180B, to generate corresponding motion data. The motion data may be used to generate image style information.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats a battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button includes a power button, a volume button, and the like. The button may be a mechanical button, or may be a touch button. The electronic device 100 may receive a button input, and generate a button signal input related to a user setting and function control of the electronic device 100.

A software system of the electronic device 100 may use a layered architecture, an event-driven architecture, a microkernel architecture, a microservice architecture, or a cloud architecture. In this embodiment of the present invention, an Android system of a layered architecture is used as an example to illustrate the software structure of the electronic device 100.

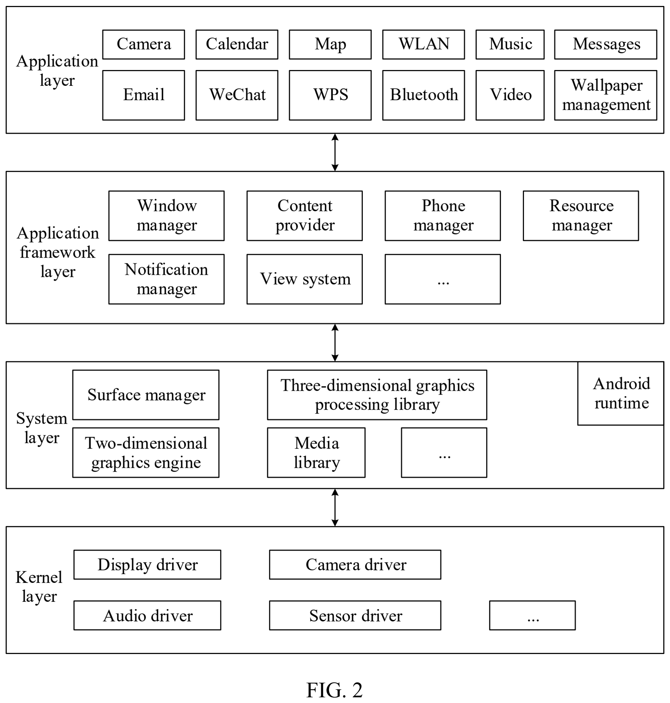

FIG. 2 is a block diagram of a software structure of an electronic device according to an embodiment of this application.

In a layered architecture, software is divided into several layers, and each layer has a clear role and task. The layers communicate with each other through a software interface. In some embodiments, an Android system is divided into four layers: an application layer, an application framework layer, Android runtime (Android runtime) and a system library, and a kernel layer from top to bottom.

The application layer may include a series of application packages.

As shown in FIG. 2, the application package may include applications such as Camera, Calendar, Map, WLAN, Bluetooth, Music, Video, Messages, Email, WeChat, and WPS. In this embodiment, the application package may further include the wallpaper management application provided in this embodiment of this application, and wallpaper switching on an interface is implemented by using the wallpaper management application.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a bookmark, an address book, and the like.

The view system includes visual controls such as a control for displaying a text and a control for displaying an image. The view system may be configured to construct an application. A display interface may include one or more views. For example, a display interface including a messages notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification-type message that may automatically disappear after a short pause without requiring user interaction. For example, the notification manager is configured to notify download completion, give a message notification, and the like. The notification manager may alternatively be a notification that appears in a top status bar of the system in a form of graph or scroll bar text, for example, a notification of an application that is run on the background, or may be a notification that appears on a screen in a form of dialog window. For example, text information is displayed in the status bar, an alert tone is made, the electronic device vibrates, or the indicator light blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system layer may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

With reference to a scenario in which a wallpaper on a lock screen is switched when the screen is turned on, the following describes a working procedure of software and hardware of the electronic device 100 by using an example.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. The touch operation is a touch tap operation, and the tap operation is used to turn on the display 194. The display 194 is turned on by using the display driver. When a screen-on event is detected, a corresponding event triggering instruction is sent to a wallpaper management program through an interface of the application framework layer, so that a new wallpaper is set for a screen-on interface by using the wallpaper management program, and a lock screen with a replaced new wallpaper is displayed on the display 194.

With continuous development of electronic device technologies, applications of the electronic device have been applied to all aspects of daily life and work of a user, and the user needs to use the electronic device for a long time. Therefore, aesthetics and interest of an interface of the electronic device become a focus of the user. The user may set, based on a preference of the user, wallpapers on some interfaces of the electronic device, for example, the wallpaper on the lock screen, a wallpaper on a home screen, and wallpapers on interaction interfaces with different contacts in a chat application. Corresponding wallpapers are set for different interfaces, so that aesthetics of the interfaces can be improved, thereby improving user experience.

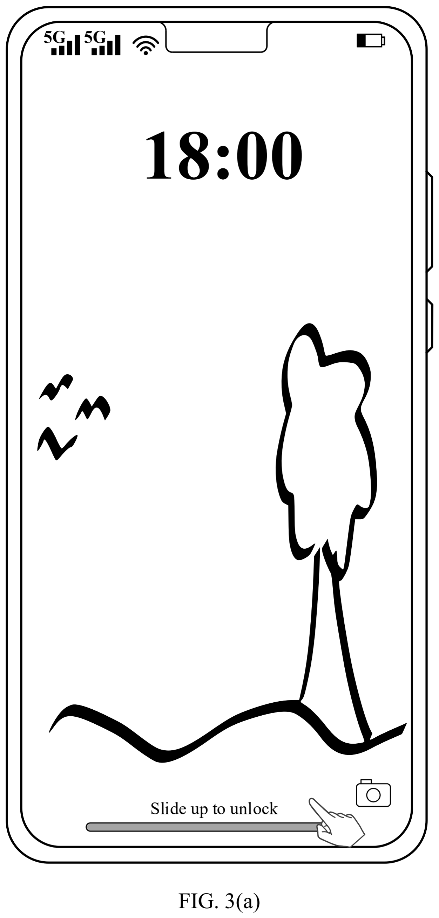

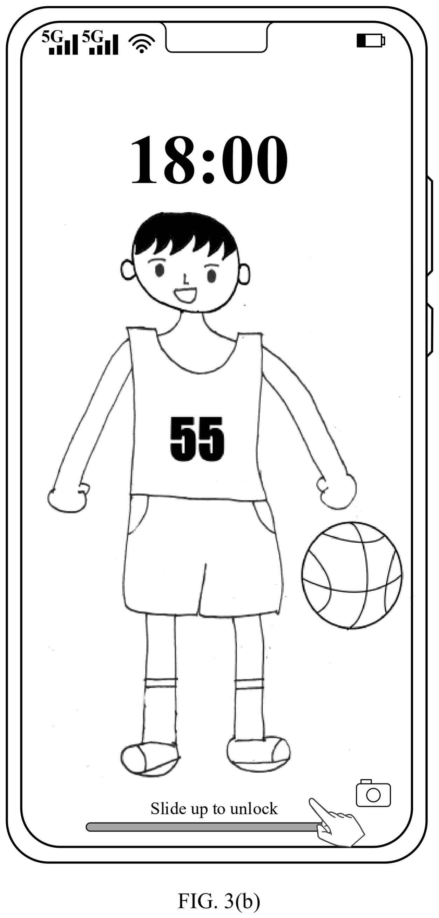

In an existing wallpaper management technology, to increase interest of a wallpaper while maintaining aesthetics of an interface, the interface may be updated in a manner of randomly switching the wallpaper, to avoid aesthetic fatigue of the user caused by maintaining a wallpaper on a same interface unchanged for a long time. Wallpapers for random switching are generally stored in a gallery of the electronic device. For example, FIG. 3(a) and FIG. 3(b) are a diagram of existing wallpaper switching. As shown in FIG. 3(a), the interface is a lock screen, and a wallpaper on the lock screen is a scenery image. When a specific switching condition is met, for example, retention duration of the wallpaper is greater than a preset duration threshold, the wallpaper may be switched to another image, for example, a person image, as shown in FIG. 3(b), to implement automatic switching of the wallpaper on the interface. However, although the foregoing manner can implement automatic switching of the wallpaper on the interface, because a structure difference between foreground objects of wallpapers that are randomly switched is large, as shown in FIG. 3(a) and FIG. 3(b), an overall view difference of the entire interface is large, interface consistency at different moments is reduced, and a user cannot quickly locate a location of a to-be-operated control. This affects operation efficiency of the user. In addition, because the wallpaper for switching on the interface is randomly selected from the gallery, aesthetics of the wallpaper may not meet an aesthetic standard of the user, thereby reducing accuracy of wallpaper recommendation and affecting user experience.

### Embodiment 1:

To resolve the foregoing problem in the existing wallpaper management technology, an embodiment of this application provides a wallpaper display method. According to the wallpaper display method provided in this embodiment, it can be ensured that foreground objects of displayed wallpapers have a same feature in a first feature dimension, and background pictures are different, so that the wallpaper displayed on an interface can be dynamically changed, and consistency of foreground objects on the interface can be considered, thereby improving user experience in a process of using an electronic device.

The wallpaper display method provided in this embodiment of this application is applied to the electronic device. The electronic device is configured with at least one display, and may display an interface on the display. A wallpaper may be configured on the interface. According to the wallpaper display method provided in this embodiment, different wallpapers may be displayed on the interface at different moments. The wallpaper display method provided in this embodiment of this application may specifically include two phases: a setting phase and a display phase.

### Setting phase:

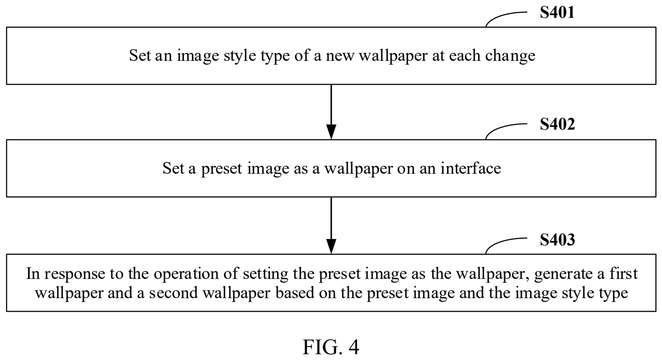

For example, FIG. 4 is an implementation flowchart of the setting phase in the wallpaper display method according to an embodiment of this application. As shown in FIG. 4, a specific implementation process of the setting phase of the wallpaper display method is described as follows:
S401: Set an image style type of a new wallpaper at each change.

In this embodiment, to improve consistency between new wallpapers displayed on an interface, that is, new wallpapers displayed at different moments have a same theme, a corresponding image style type may be set. The image style type may be set by a user, or may be set by a system by default. The user may set a wallpaper in a theme application and/or a wallpaper application installed on the electronic device.

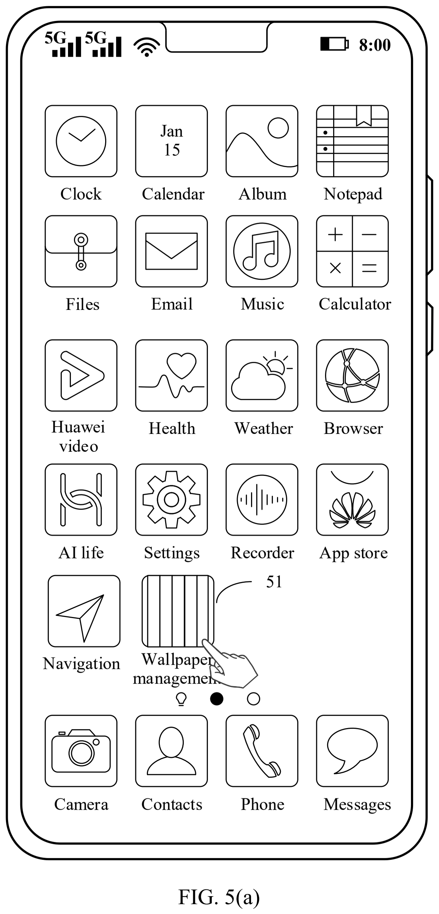

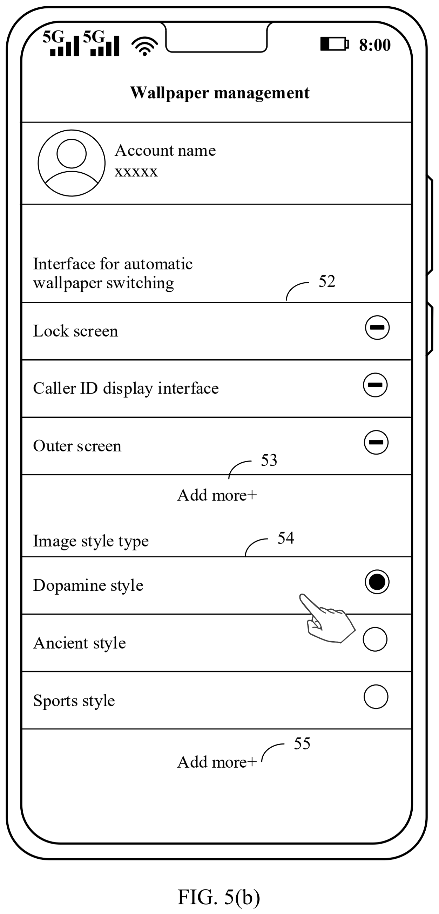

In a possible implementation, the image style type may be set by the user. For example, FIG. 5(a) and FIG. 5(b) are a diagram of setting the image style type according to an embodiment of this application. Refer to FIG. 5(a). Icons of a plurality of installed applications are displayed on a home screen of the electronic device, including an icon 51 of a wallpaper management application. The user may tap the icon 51 to enter a wallpaper management setting interface, as shown in FIG. 5(b). The wallpaper management setting interface includes a setting item 52 of applying automatic wallpaper switching on an interface. For example, a lock screen, a caller ID display interface, and the like may be added to interfaces on which automatic wallpaper switching is applied. Certainly, if more interfaces need to be added, an add more control 53 may be tapped to add more interfaces for automatic wallpaper switching. The wallpaper management setting interface further includes a setting item 54 of the image style type. A plurality of candidate image style types are displayed in the setting item, such as a dopamine style, an ancient style, a retro style, an underwater style, a sports style, a cartoon style, and a light and shadow photography style. The user may select one image style type from the plurality of image style types. In some implementation scenarios, two or more image style types may be selected.

If the image style types displayed in the setting item 54 of the image style type need to be expanded, a more control 55 may be tapped, so that an image style type that can be edited by the electronic device may be expanded in a manner of connecting to a server. In this case, the server may receive sample images uploaded by a related designer. Each sample image may be associated with a corresponding image style type. The server may generate a corresponding style editing algorithm based on a plurality of sample images belonging to a same image style type, and send the corresponding style editing algorithm to the electronic device. The electronic device may generate, according to the received style editing algorithm, an image having a corresponding image style.

S402: Set a preset image as a wallpaper on an interface.

In this embodiment, the preset image may be an image selected by the user, or may be an image obtained by performing secondary composition on the image selected by the user.

In some implementations, the electronic device may perform, based on a preset second constraint condition, secondary composition on the image selected by the user. When a target image selected by the user does not meet the second constraint condition, secondary composition may be performed on the image selected by the user, to obtain the preset image. When the target image selected by the user meets the second constraint condition, secondary composition may not be performed, that is, the preset image is the image selected by the user.

In some implementations, the second constraint condition may include at least one of the following:
an area proportion of a foreground object in the image is within a preset proportion range;
an area proportion of a key part of the foreground object in the image is within a preset proportion range, where the key part may be a face of the foreground object;
the foreground object in the image is on an axis of the first image;
the key part of the foreground object in the image is on the axis of the image; and
a specified part of the foreground object in the image is invisible, where the specified part may be a hand of the foreground object.

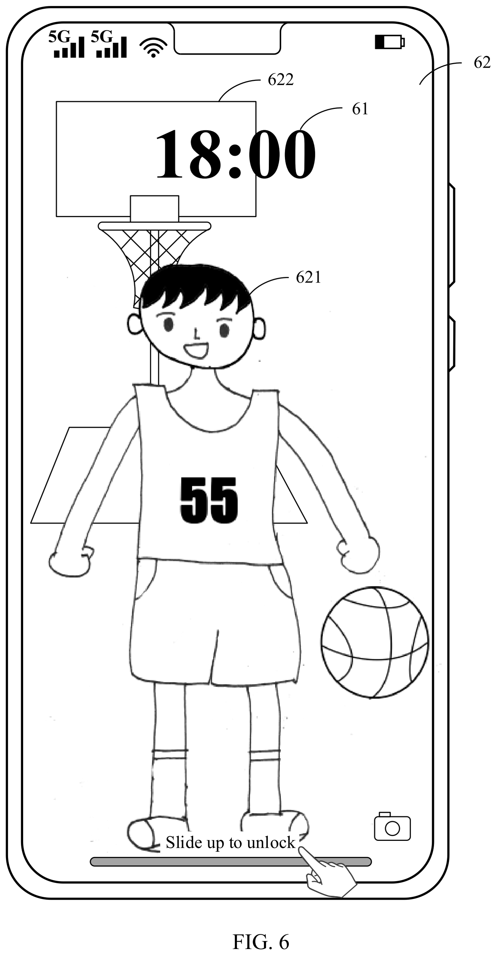

In this embodiment, corresponding wallpapers, namely, preset images, may be configured on different interfaces of the electronic device. The preset image may generally include a foreground object (namely, a subject in the wallpaper) and a background picture. For example, FIG. 6 is a diagram of an interface according to an embodiment of this application. Refer to FIG. 6. The interface is a lock screen. The lock screen includes a time control 61 and a customized quick control, and may further include a preset image 62 that is set as a wallpaper on the interface, where a portrait 621 is displayed in the preset image 62, and is a foreground object in the wallpaper image, and a corresponding background picture 622 may be further included. For example, a basketball stand is included. The electronic device may set different preset images in a gallery as wallpapers on different interfaces. The preset images may be selected and determined by the user, or may be determined by the electronic device in a default setting manner.

It should be noted that fixed wallpaper pictures may not be preset on some interfaces, but a corresponding wallpaper picture is set for the interface in real time based on event content of a trigger event when the corresponding event is triggered. For example, for an incoming call notification interface and a video call interface, in response to a call request, a contact image associated with a requester of the call request may be used as a wallpaper image of the incoming call notification interface and the video call interface. The foregoing setting operation is specifically setting the contact image for the contact, where the preset image is the contact image. In the conventional technology, when a same contact initiates call requests at different moments, a same contact image is displayed on both an incoming call notification interface and a video call interface that are displayed on the electronic device. This is low in interest. Therefore, in this embodiment, a wallpaper that is on an interface and that is set based on a contact image may also be switched, to improve interest of an interface while maintaining interface consistency.

In some implementations, in addition to being determined in S401, the image style type may alternatively be determined based on the set preset image. After the user sets the preset image, an image style type corresponding to a wallpaper generated subsequently may be determined based on the foreground object in the preset image.

In some implementations, the image style type may be determined based on description information of the foreground object in the preset image. The description information may include an age and a gender of the foreground object in the preset image. For example, if the foreground object in the preset image is a young female, the description information may include two feature parameters "young" and "female", and then an image style type that matches the description information may be subsequently determined based on the description information, for example, the dopamine style or the ancient style.

In some implementations, the description information may be determined by the electronic device by performing object identification on the preset image, or may be obtained by the user by adjusting an identification result obtained by performing identification on the preset image, or may be manually set by the user. A specific obtaining manner may be determined based on an actual situation. This is not limited herein.

In some implementations, the image style type applied when style processing is performed on the preset image may be further determined based on the image style type determined in S401 and the foreground object in the preset image. For example, if a plurality of image style types are determined in S401, including the dopamine style and a mechanical style, the foreground object in the preset image is a female, and the female does not match the mechanical style, the dopamine style may be selected as the image style type currently applied when style processing is performed on the preset image.

In a possible implementation, a new wallpaper (for example, a first wallpaper and a second wallpaper) displayed on the interface each time is generated based on the preset image corresponding to the interface and the image style type.

In this embodiment, the first wallpaper and the second wallpaper may be generated on the electronic device, or may be generated by the server.

In a possible implementation, when the first wallpaper and the second wallpaper are generated on the electronic device, after S402, the method further includes:

S403: Generate the first wallpaper and the second wallpaper based on the preset image and the image style type in response to the operation of setting the preset image as the wallpaper. A first feature of a first foreground object in the first wallpaper is the same as a second feature of a second foreground object in the second wallpaper. The first feature and the second feature are features in a first feature dimension. When there are a plurality of image style types, one or more wallpapers may be generated based on each of the different image style types. For example, wallpapers generated based on the preset image include the first wallpaper, the second wallpaper, a third wallpaper, and a fourth wallpaper. The first wallpaper and the second wallpaper are generated based on a same image style type, for example, a first image style type, and the third wallpaper and the fourth wallpaper are generated based on another image style type, for example, a second image style type.

In this embodiment, after completing an interface wallpaper setting operation, the electronic device may generate, based on the preset image that is set as an interface wallpaper, a plurality of wallpapers for subsequent use, so that when a wallpaper display event is subsequently detected, one wallpaper is selected from the pre-generated wallpapers for display. In this way, there is no need to wait for the wallpaper to be generated by the electronic device for display, thereby improving display smoothness. The plurality of generated wallpapers include the first wallpaper and the second wallpaper.

In some implementations, when the first wallpaper and the second wallpaper are generated on the server, after S402, the following steps are further included.

Step 1: The electronic device sends an image generation indication to the server in response to an operation of setting the preset image as the wallpaper, where the image generation indication includes the preset image.

In this embodiment, when the user initiates the wallpaper setting operation on the electronic device, the image generation indication may be sent to the server, so that the server can generate the plurality of images obtained based on the preset image, to reduce computing pressure of the electronic device.

In some implementations, the server may be a server corresponding to an application that implements a wallpaper generation function, for example, a server corresponding to the wallpaper application or the theme application.

In some implementations, the preset image includes a third foreground object, the image generation indication further includes description information of the third foreground object, and the description information of the third foreground object is used by the server to determine an image style type corresponding to the plurality of to-be-generated images. The electronic device may determine the description information of the third foreground object in the preset image, add the description information to the image generation indication, and send the image generation indication that carries the preset image and the description information to the server.

In some implementations, the description information may include an age and/or a gender of the foreground object.

Step 2: The server generates the plurality of images based on the preset image and the image style type, where the plurality of images include the first wallpaper and the second wallpaper.

In this embodiment, the image style type may be determined by the server. For example, the server determines, based on the third foreground object in the preset object, the image style type matching the third foreground object. Alternatively, the image generation indication may further include an image style type, and the server may determine the image style type based on the image style type in the image generation indication.

In some implementations, if the image generation indication further includes the description information, the image style type may be determined based on the description information.

In this embodiment, the process in which the server generates the plurality of images is the same as the process in which the electronic device locally generates the first wallpaper and the second wallpaper. For a specific implementation process, refer to related descriptions in S403. Details are not described herein again.

Step 3: The electronic device receives the plurality of images sent by the server, and adds at least two of the plurality of images to a wallpaper library, where the at least two images include the first wallpaper and the second wallpaper.

During specific implementation, the plurality of images may be all added to the wallpaper library, or an image selected by the user may be added to the wallpaper library.

In this embodiment of this application, the server generates the plurality of images corresponding to the preset image, so that computing pressure on the electronic device can be reduced. In addition, the server has a higher computing capability, so that an image generation speed can also be improved, waiting duration of the user is reduced, and user experience is improved.

In a possible implementation, a quantity of the plurality of generated wallpapers may be 10, or may be another value, and may be specifically determined based on a setting.

In a possible implementation, the electronic device may determine the quantity of the plurality of wallpapers based on a wallpaper display event initiating frequency of the user. For example, if the user turns on a screen at high frequency, the quantity of the plurality of wallpapers is large. On the contrary, if the user turns on the screen at low frequency, the quantity of the plurality of wallpapers is small.

In this embodiment, the first wallpaper includes a first object, the second wallpaper includes a second object, and the first object and the second object are generated based on a third object in the same preset image.

In some implementations, the third object may be at least one of a person, an animal, a plant, a mountain, or a water flow.

For example, the preset image is an image photographed by a user A on Huashan Mountain, and after the preset image is processed based on a preset image style type (for example, the image style type is a four-season rotation type), the first wallpaper with a spring theme and the second wallpaper with a winter theme are obtained. The first wallpaper has a same composition as the preset image and also includes the user A and Huashan Mountain. Flowers bloom on Huashan Mountain, which matches the spring theme. The second wallpaper also has the same composition as the preset image and also includes the user A and Huashan Mountain. Huashan Mountain is covered with snow, which matches the winter theme.

In some implementations, the first wallpaper includes a first foreground object, the second wallpaper includes a second foreground object, and the first foreground object and the second foreground object are generated based on the third foreground object in the same preset image.

In this embodiment, the electronic device may extract a feature of the foreground object in the first feature dimension from the preset image, generate a background picture and a feature of the foreground object in a feature dimension other than the first feature dimension based on the image style type, and then fuse the generated background picture, the generated feature of the foreground object in the another feature dimension, and the extracted feature in the first feature dimension to generate a new wallpaper.

In this embodiment, to ensure consistency between the plurality of generated new wallpapers, foreground objects of the first wallpaper and the second wallpaper are strongly associated. To be specific, the first foreground object in the first wallpaper and the second foreground object in the second wallpaper have a same feature in the first feature dimension, that is, the first feature of the first foreground object is the same as the second feature of the second foreground object.

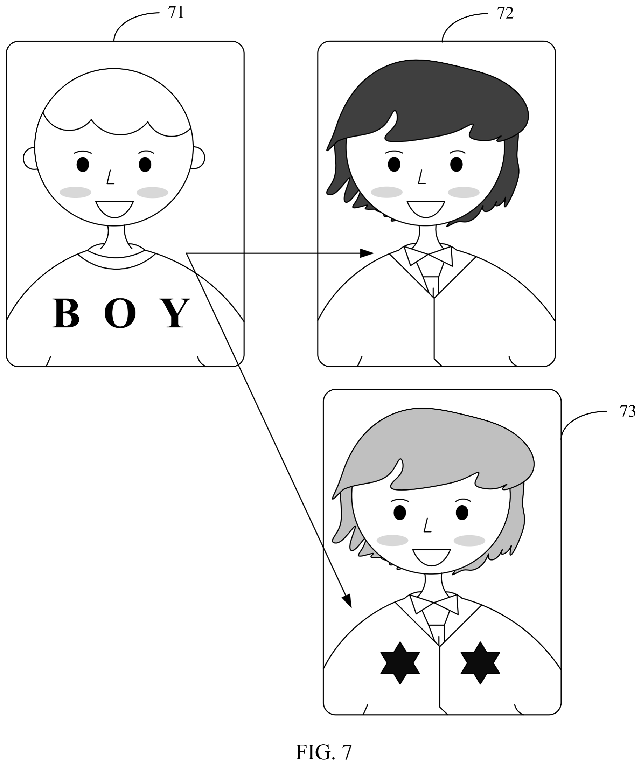

In a possible implementation, the foreground object may be any one of a person, an animal, or a plant. For example, FIG. 7 to FIG. 10(c) are diagrams of editing different foreground objects according to this application.

FIG. 7 is a diagram of generating a new wallpaper when a foreground object is a portrait according to an embodiment of this application. Refer to FIG. 7. A foreground object in a preset image (namely, an image 71) is a portrait, and in new wallpapers, namely, an image 72 and an image 73, generated based on the preset image and an image style type, a hairstyle and clothing of the portrait may be changed, so that foreground objects in all obtained new wallpapers are a same person, for example, both are images including Zhang San, that is, persons in the image 72 and the image 73 are both Zhang San, having a same feature. In addition, when the image 72 and the image 73 are generated, face makeup of the portrait may be further changed, for example, a lipstick color, an eye shadow, or blush of the portrait is added or changed.

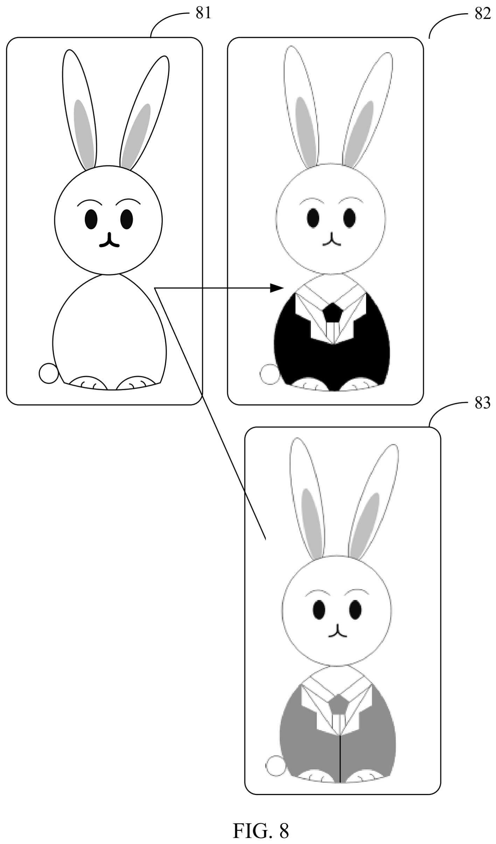

FIG. 8 is a diagram of generating a new wallpaper when a foreground object is an animal according to an embodiment of this application. Refer to FIG. 8. A foreground object in a preset image (namely, an image 81) is a rabbit, and in new wallpapers, namely, an image 82 and an image 83, generated based on the preset image and an image style type, clothing may be added to the rabbit, and clothing colors of the rabbit may be different in different generated wallpapers. For example, clothing in the image 82 is black, and clothing in the image 83 is gray. Optionally, animals in different generated wallpapers are a same animal, that is, a rabbit in the image 81 belongs to Zhang San, and in this case, both rabbits in the image 82 and the image 83 generated based on the image 81 are rabbits of Zhang San, having a same feature.

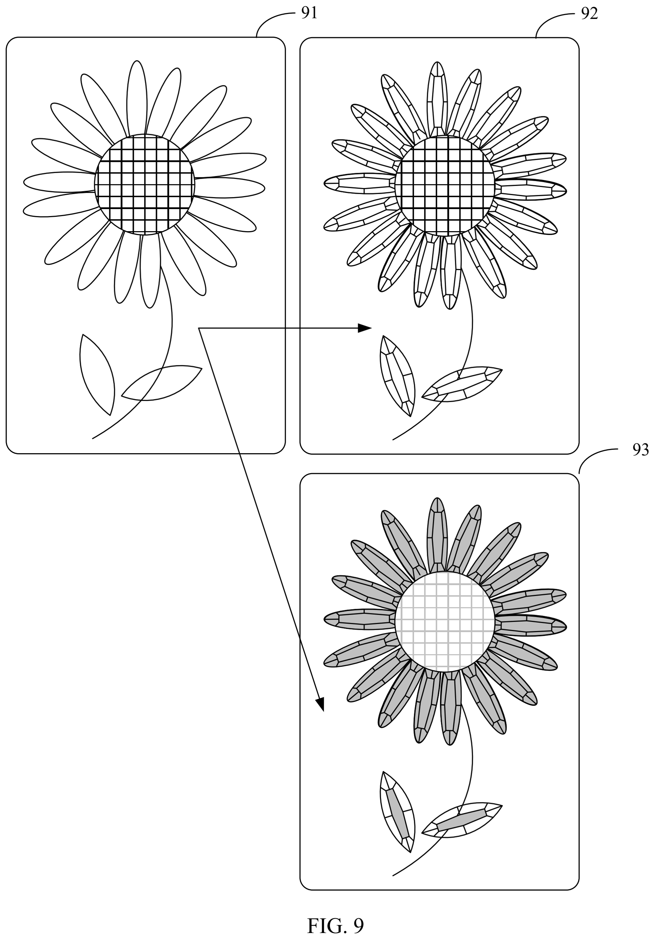

FIG. 9 is a diagram of generating a new wallpaper when a foreground object is a plant according to an embodiment of this application. Refer to FIG. 9. A foreground object in a preset image (namely, an image 91) is a daisy, and in new wallpapers, namely, an image 92 and an image 93, generated based on the preset image and an image style type, a material of the daisy may be changed to a crystal-style material, but colors may be different, that is, plant varieties and shapes in different generated wallpapers are the same, having a same subject form feature.

A type of the foreground object is not limited herein.

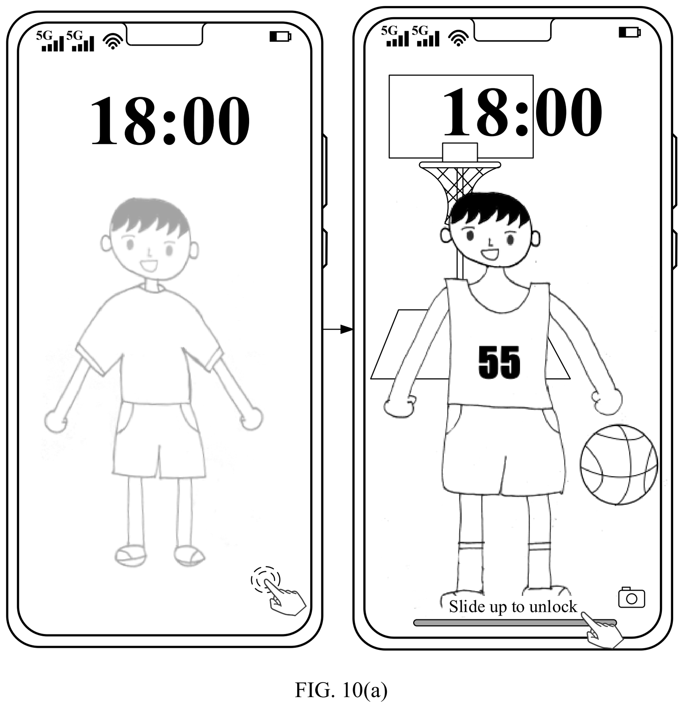

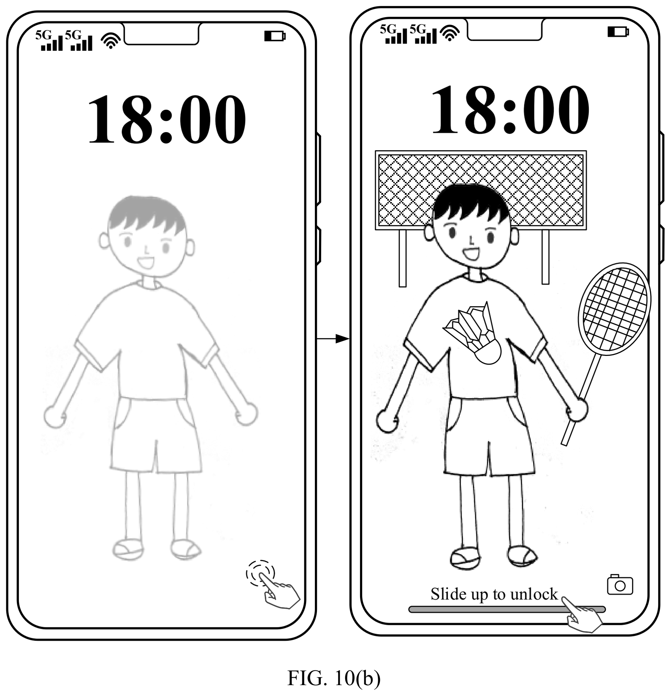

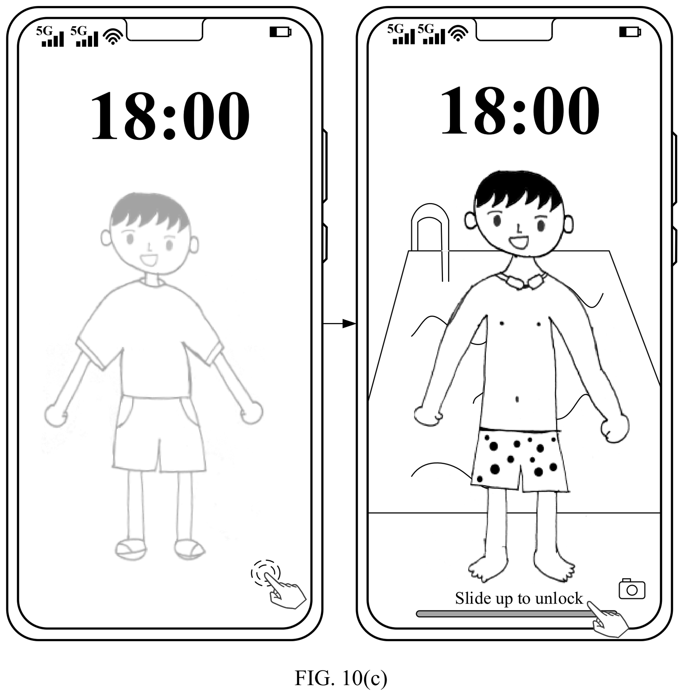

To better describe a relationship between wallpaper generated each time and the image style type, FIG. 10(a) to FIG. 10(c) are a diagram of a plurality of different generated wallpapers according to an embodiment of this application. Refer to FIG. 10(a) to FIG. 10(c). The interface is a lock screen. The lock screen includes a preset image that is set by a user, and an image style type preset by the user is a sports style type. Therefore, based on the preset image and the image style type, new wallpapers generated are sports-related images. For example, as shown in FIG. 10(a), a user wears basketball clothing and holds a basketball; as shown in FIG. 10(b), the user wears badminton clothing and holds a badminton racket; and as shown in FIG. 10(c), the user wears swimming pants. Each of a plurality of generated wallpapers corresponds to one sports theme, but corresponding sports types are different. If scene information (for example, location information of the user) may be obtained when the wallpaper is generated, a wallpaper related to a scenario of the user may be generated based on the location information. For example, when the user is in a swimming field, the wallpaper in FIG. 10(c) may be generated; and if the user is in a basketball court, the wallpaper in FIG. 10(a) may be generated.

In this embodiment, generating a first wallpaper and a second wallpaper based on the preset image and the image style type specifically includes: determining a first feature based on the preset image; and generating the first wallpaper based on the image style type and the first feature.

In this embodiment, a feature of each generated new wallpaper in a first feature dimension is determined based on the preset image, that is, an electronic device uses a feature of a foreground object in a first feature dimension in the set preset image as a feature of a foreground object in the first feature dimension in a subsequently generated new wallpaper, for example, the first feature of the first wallpaper and a second feature of the second wallpaper. Because features of different generated wallpapers in the first feature dimension are all from a same image (namely, the preset image), it can be ensured that different generated wallpapers have a same feature in the first feature dimension.

In a possible implementation, the first feature dimension may be a facial feature dimension (for example, a facial feature dimension). Features in the facial feature dimension may include features representing a face shape, an interocular distance, a mouth size, and/or a proportion of facial features.

The features are the same, which may be specifically represented by that similarities of feature vectors describing the features meet a similarity condition. A same facial feature is used as an example. If a feature vector of a facial feature a in the first wallpaper and a feature vector of a facial feature b in the second wallpaper meet the similarity condition (for example, a Euclidean distance between the two is less than a threshold), it is considered that the facial feature a and the facial feature b are the same. Because both a first foreground object and a second foreground object are generated based on a third foreground object in the preset image, the feature vector of the facial feature a and a feature vector of a facial feature c in the preset image also meet the similarity condition. Similarly, the feature vector of the facial feature b and the feature vector of the facial feature c in the preset image also meet the similarity condition.

In this embodiment of this application, in a process of generating the wallpaper (for example, the first wallpaper and the second wallpaper) based on the preset image, a similarity between a feature vector (for example, the facial feature) of a feature in the generated wallpaper and the feature vector of the feature in the preset image may be controlled to meet a preset similarity condition. Therefore, the feature of the generated wallpaper is the same as the feature of the preset image, and features of different wallpapers generated based on the same preset image are the same.

For example, the foreground object is a portrait, that is, facial features of foreground objects in a plurality of different generated wallpapers are the same, and the facial features of the foreground objects in the generated wallpapers and the facial feature of the foreground object in the preset image need to correspond to a same person. In some implementations, to make the first wallpaper and the second wallpaper have the same facial feature, when the first wallpaper and the second wallpaper are generated, a facial image of the third foreground object in the preset image may be extracted, and the facial image is used as facial images in the first wallpaper and the second wallpaper, so that the facial feature of the first foreground object in the first wallpaper is the same as the facial feature of the third foreground object in the preset image, and the facial feature of the second foreground object in the second wallpaper is the same as the facial feature of the third foreground object in the preset image. In some implementations, to make the first wallpaper and the second wallpaper to have the same facial feature, when the first wallpaper and the second wallpaper are generated, the facial feature of the third foreground object in the preset image may also be extracted, and the facial image of the first foreground object in the first wallpaper and the facial image of the second foreground object in the second wallpaper are generated based on a feature vector of the facial feature of the third foreground object, so that the first wallpaper and the second wallpaper have the same facial feature.

To make the foreground object in the generated wallpaper and the foreground object in the preset image to be a same person, the following two manners may be used for implementation:
Manner 1: Replace the face. In a case in which Manner 1 is used, a first facial feature of the foreground object (namely, the third foreground object) may be extracted from the preset image, and the first facial feature of the third foreground object is used as the facial feature of the foreground object (namely, the first foreground object of the first foreground object or the second foreground object of the second foreground object) in the generated wallpaper.

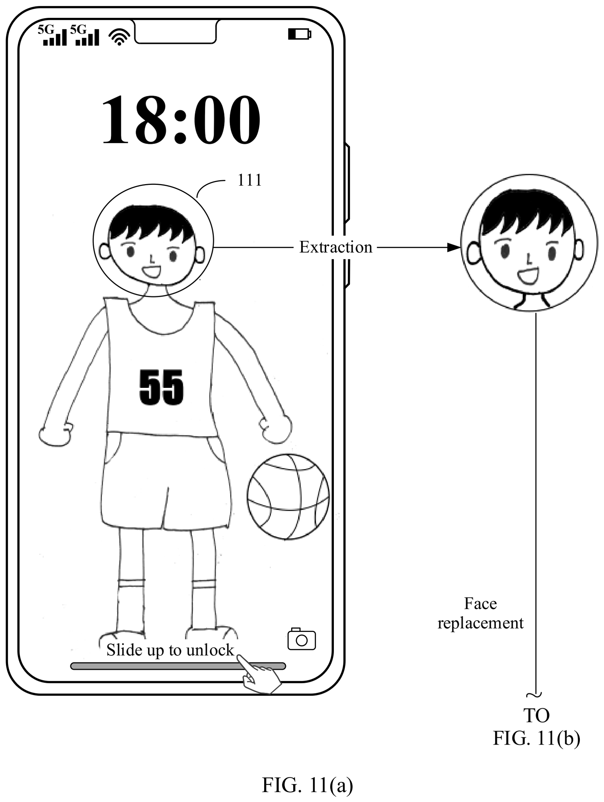

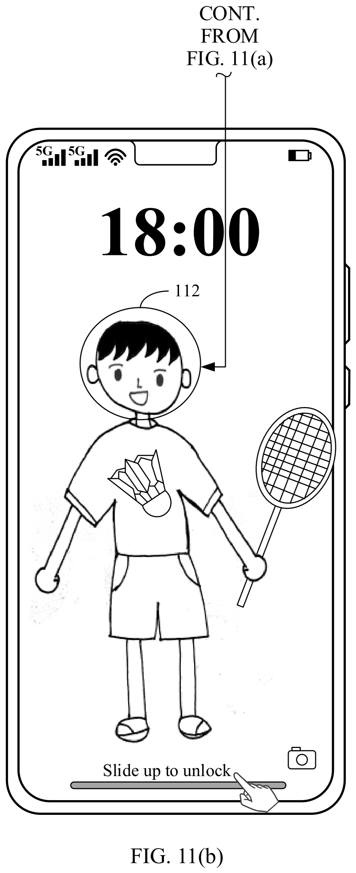

For example, FIG. 11(a) and FIG. 11(b) are a diagram of generating a new wallpaper in a face replacement manner according to an embodiment of this application. FIG. 11(a) is a preset image before style editing. The preset image includes a facial feature 111. An electronic device may change clothing of a foreground object in the preset image, for example, change basketball clothing to badminton clothing, but does not change a subject form of the foreground object. Therefore, the facial feature 111 in the preset image may be directly used as a facial feature of a foreground object in a new wallpaper, as shown in FIG. 11(b), that is, a facial feature 112 is obtained. This ensures consistency of facial features between the two images.

Manner 2: Obtain a facial feature based on a pre-trained face library. In a case in which Manner 2 is used, the electronic device may generate a face library based on a stored local image. The electronic device calculates a similarity between facial features in different local images, identifies facial features corresponding to a plurality of local images between which a similarity is greater than a preset similarity threshold as belonging to a same object, and generates, based on the facial features of the plurality of local images belonging to the same object, a second facial feature corresponding to the object. When generating the new wallpaper based on the preset image and an image style type, the electronic device may determine whether the second facial feature of the foreground object in the preset image is stored in the face library. If the second facial feature of the foreground object is stored, a facial feature that matches a subject form of the foreground object in the new wallpaper may be determined based on the second facial feature and the first facial feature (used to determine a posture and an angle of a face) of the foreground object in the preset image. When the foreground object (for example, the first foreground object or the second foreground object) in the new wallpaper is generated, the subject form of the foreground object in the new wallpaper may be different from the subject form of the foreground object in the preset image. For example, when a hairstyle is changed, a visible area of the face changes. In this case, if only the facial feature is replaced, a hairstyle of the foreground object in the new wallpaper cannot be matched. In this case, the facial feature in the new wallpaper may be adaptively determined based on the second facial feature of the foreground object in the face library.

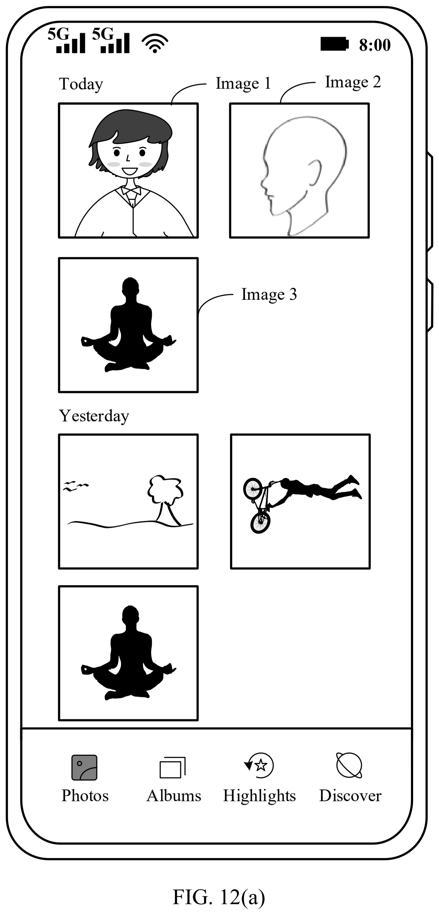

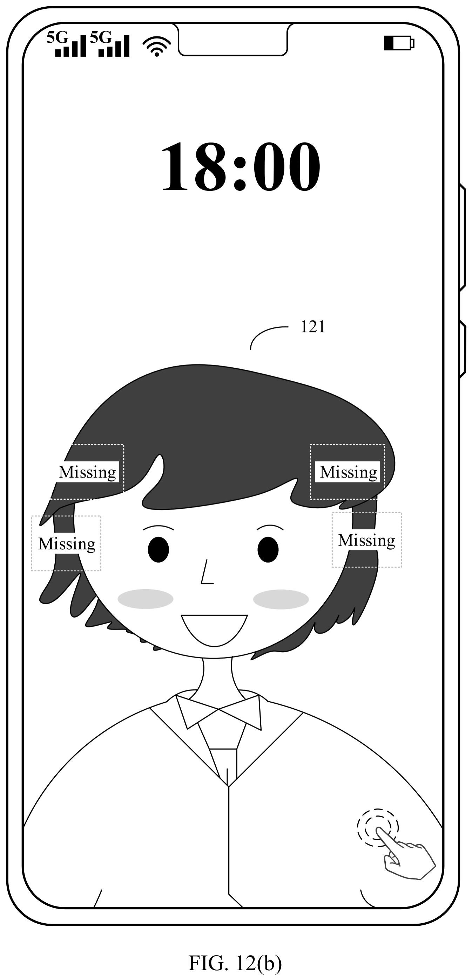

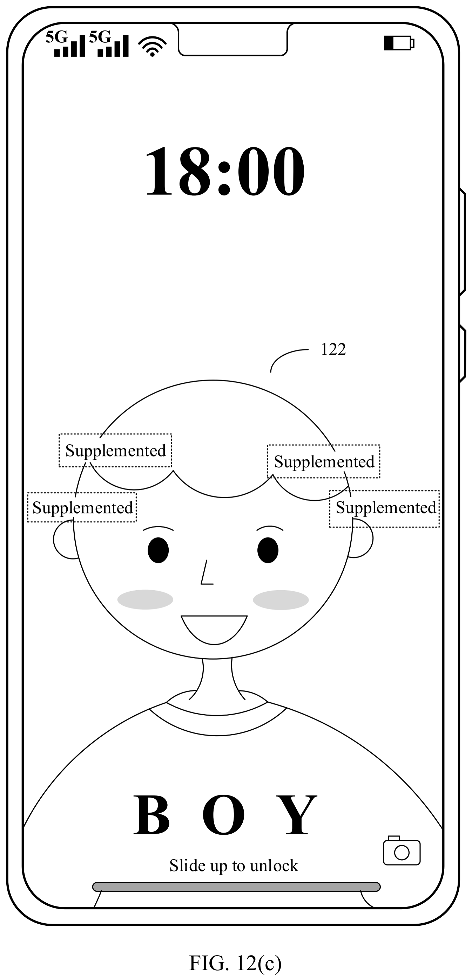

For example, FIG. 12(a) to FIG. 12(c) are a diagram of generating a new wallpaper based on a face library according to an embodiment of this application. Refer to FIG. 12(a). An album in an electronic device stores a plurality of local images about a user A, for example, an image 1 to an image 3. The image 1 to the image 3 each include a facial feature of the user A. In this case, the electronic device may obtain a second facial feature of the user A in a big data pre-training manner, and store the second facial feature in a face library. On a lock screen of the electronic device, an image 121 of the user A is set as a wallpaper, as shown in FIG. 12(b). Because the user A in the image 121 has long hair, areas of both ears of the user A and a part of a facial contour are blocked. If a hairstyle of the user A needs to be edited when a new wallpaper is generated, the areas of both ears and a missing facial contour may need to be supplemented. In this case, the electronic device obtains the second facial feature of the user A from the face library, obtains features of the areas of both ears and the missing facial contour, and may supplement, based on the supplemented facial contour, the features of the areas of both ears, and facial features of the user A in the image 121, facial features in the generated new wallpaper with facial features shown in an image 122 in FIG. 12(c).

In this embodiment of this application, when generating a face area in the new wallpaper, whether the electronic device directly replaces the face feature or generates the face area based on the face feature in the face library may be determined based on an actual situation. This improves flexibility of determining the facial feature in wallpaper generation.

During specific implementation, feature vectors may be extracted based on image data of the face area in the preset image, and then the wallpaper is generated based on the extracted feature vectors. Specifically, the feature vector may be extracted by using an image encoder based on a CLIP model (Contrastive Language-Image Pre-Training), and the extracted feature vector may be input into a stable diffusion (stable diffusion) model to generate a new image as the wallpaper.

In a possible implementation, the first feature dimension may include a subject form dimension, and the corresponding first feature and the corresponding second feature are subject form features, that is, subject forms corresponding to foreground objects in generated new wallpapers are the same. The subject form feature of the foreground object in the new wallpaper is determined based on a subject form feature of the foreground object in the preset image. For example, if the foreground object is a portrait, and the portrait in the preset image is in a standing state, portraits in all generated new wallpapers are also in the standing state; or if the portrait in the preset image is in a sitting posture, the portraits in all generated new wallpapers are also in the sitting posture.

For example, if the foreground object is a flower, and the flower in the preset image is in a blooming state, flowers in all generated new wallpapers are also in the blooming state; and if the flower in the preset image is in a pre-blooming state (namely, a bud state), the flowers in all generated new wallpapers are also in the pre-blooming state (namely, also in the bud state).

In this embodiment, to identify the subject form of the foreground image in the preset image, the electronic device may process the preset image by using a preset object subject identification algorithm, to obtain a subject form feature of a third foreground in a subject form dimension in the preset image, and use the subject form feature as subject form features of all foreground objects in new wallpapers, for example, as a first feature of a first foreground object in the subject form dimension and a second feature of a second foreground object in the subject form dimension. Optionally, the subject form feature is specifically a pose corresponding to each key node of the foreground object (that is, includes two dimensions: a location and a posture). For example, the subject form feature includes: a head location and a head orientation, a hand location and a posture, a foot location and a posture, a torso location and a posture, and the like. The object subject identification algorithm may mark a location corresponding to each key point of the foreground object in the preset image and a corresponding posture angle in the preset image, to form the subject form feature.

In a possible implementation, determining the subject form feature of the foreground object in the preset image may specifically include the following four steps:
Step 1: Extract skeletal posture information of the third foreground object in the preset image by using a skeletal identification algorithm.
Step 2: Extract contour information of the third foreground object in the preset image by using an edge identification algorithm.
Step 3: Obtain depth information of the third foreground object in the preset image by using a depth algorithm.
Step 4: Obtain the subject form feature of the foreground object in the preset image based on the skeletal posture information, the contour information, and the depth information. It should be noted that, when the subject form feature is generated, the subject form feature may be generated based on the skeletal posture information and at least one of the contour information and the depth information, that is, the skeletal posture information is necessary information, and the other two pieces of information may be selected based on an actual situation.

In this embodiment, the skeletal posture information is used to determine an action posture of the foreground object, the contour information is used to determine a size and a location of the foreground object, and the depth information is used to determine an orientation posture corresponding to each part of the foreground object. Therefore, the subject form feature of the foreground object in the preset image may be determined based on the action posture, the size of the object, the location of the object, and the orientation posture of each part.

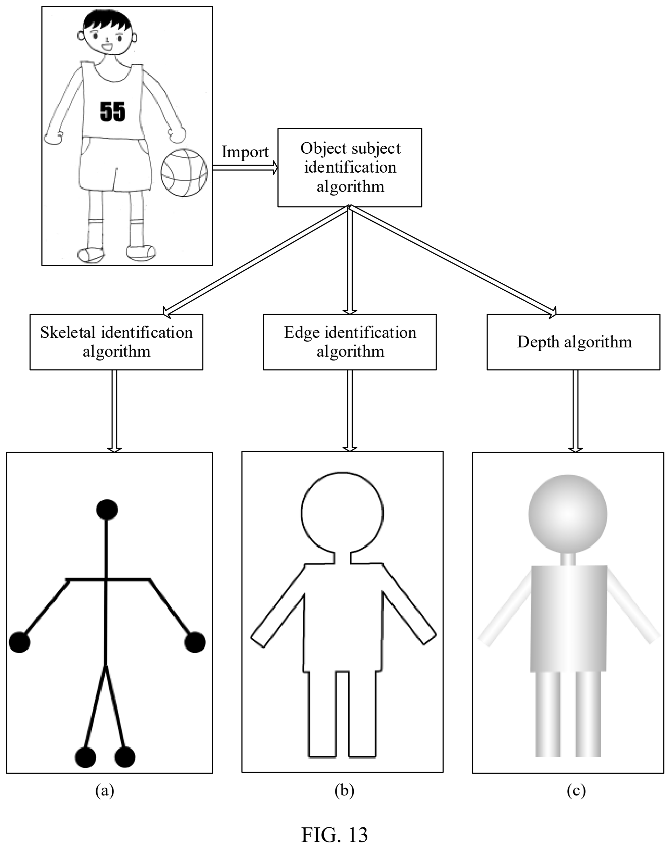

For example, FIG. 13 is a diagram of extracting a subject form feature of a foreground object according to an embodiment of this application. Refer to FIG. 13. An electronic device may separately import a preset image into the foregoing three algorithms, to separately obtain skeletal posture information, contour information, and depth information of the preset image. The skeletal posture information may be represented by using a key node diagram as shown in (a) in FIG. 13. The contour information may be represented by using a contour diagram as shown in (b) in FIG. 13. The depth information may be represented by using a depth diagram as shown in (c) in FIG. 13. The electronic device may configure corresponding weight values for different information based on contributions of different information to a subject form, to perform feature fusion on the three types of information to obtain a subject form feature. For example, a weight value of the key node diagram is 1, a weight value of the contour diagram is 0.2, and a weight value of the depth diagram is 0.5. Specifically, weight values of different information may be set based on an actual situation. This is not limited herein.

In this embodiment, when generating a new wallpaper based on the preset image and an image style type, the electronic device maintains a feature of the preset image in a first feature dimension, and generates a feature in a changeable feature dimension other than the first feature dimension, that is, generates a feature (for example, a third feature in a first wallpaper and a fourth feature in a second wallpaper) in a second feature dimension (for ease of understanding subsequently, the second feature dimension is referred to as the changeable feature dimension) based on the image style type. Therefore, the feature in the first feature dimension in the preset image is fused with the feature in the changeable feature dimension, to generate a foreground object in the new wallpaper. Because features in the first feature dimension in all new wallpapers are generated based on the feature of the preset image in the first feature dimension, the preset image and the new wallpapers are strongly associated in the first feature dimension, and the feature in the changeable feature dimension is generated based on the image style type. Therefore, the new wallpapers are different to some extent in the changeable feature dimension, and an image style of the new wallpaper can change with a change of the image style type. This implements dynamic adjustment of an interface wallpaper.

It should be noted that the image style type is specifically used to limit an image style range. A same style range may include a plurality of different colors, clothes, hairstyles, optional expressions, and the like. When generating the new wallpaper image, the electronic device may randomly select a combination from the image style range to determine a feature of a foreground object in the new wallpaper in the changeable feature dimension. Therefore, although any two generated wallpapers have a same image style type, there is also a difference. Therefore, diversity of the generated wallpaper can be increased.

In a possible implementation, when the new wallpapers (namely, the first wallpaper and the second wallpaper) are generated based on the preset image and the image style type, scene information may be further considered, that is, the new wallpapers are generated based on the preset image, the image style type, and the scene information.

In this embodiment, the electronic device may further obtain the scene information by using a sensor of the device, to improve association between the generated wallpaper and a scenario in which a user is located. This improves accuracy of a recommended wallpaper for display.

In some implementations, in a scenario in which the electronic device processes the preset image by using a server to obtain a plurality of images used to be set as a wallpaper, an image generation indication sent by the electronic device to the server may include the scene information. The scene information may be used by the server to generate a plurality of images corresponding to the preset image. For example, the server may determine a background picture of at least one of the plurality of images based on the scene information. Optionally, if the image generation indication includes description information of the foreground object in the preset image and the scene information, the server may further determine the image style type based on the description information and the scene information, and generate a part or all of the plurality of images based on the image style type.

In a possible implementation, the scene information includes at least one of time information, location information, weather information, a motion status, and user status information. For example, if the time information recorded in the scene information is morning, the generated wallpaper may also be a bright-tone wallpaper or a wallpaper whose background is daytime. If the time information recorded in the scene information is the birthday of the user, the generated wallpaper may be a wallpaper having a birthday element (for example, a birthday cake). If the location information recorded in the scene information is a beach, the generated wallpaper may be a wallpaper that is related to the beach or whose background is a beach. A degree of association between the specific scene information and the generated wallpaper may be set based on a requirement of the user, or may be set based on the electronic device by default.

For example, if the user status recorded in the scene information is happy, user expression in the generated wallpapers may be all happy expressions. If the user status recorded in the scene information is sad, the user expressions in the generated wallpapers may be all unhappy expressions. It should be emphasized that the scene information may be scene information corresponding to a wallpaper generation moment, or may be previously obtained scene information, or may be future scene information obtained through prediction based on behavior of the user.

In a possible implementation, the electronic device may set corresponding weighted weights for information in different dimensions in the scene information, so that degrees of correlation between the scene information in different dimensions and the generated wallpaper can be affected. For example, if the generated wallpaper needs to have a high degree of correlation with a location, but a low degree of correlation with weather, a value of a weight value of the location information may be set to a large value, and a value of a weight value of the weather information may be set to a small value. For example, Table 1 shows a correspondence table of weight contributions of the scene information in different dimensions to the generated wallpaper provided in an embodiment of this application. Refer to Table 1. Both weight values of the time information and the location information are 0.4, that is, the two scene dimensions have large impact on content of the generated wallpaper. A weight value of the weather information is 0.2, which indicates that a weather dimension has small impact on the content of the generated wallpaper. A weight value of the motion status is 0, which indicates that impact of the motion status on the content of the generated wallpaper is not considered. Specific distribution of the weight values may be set based on a user requirement, or may be automatically set based on a system by default. A setting of the weight values is not limited herein.

**Table 1**

| Scene dimension | Time information | Location information | Weather information | Motion status |
|---|---|---|---|---|
| Weight value | 0.4 | 0.4 | 0.2 | 0 |

In a possible implementation, if a scene change event is detected, a new wallpaper is generated based on scene information corresponding to the scene change event, the preset image, and the image style type. Because the scenario in which the user is located changes, the wallpaper pre-generated based on an original scenario may have relatively low association with a scenario in which the user is currently located. In this case, a new wallpaper needs to be generated. Therefore, a third wallpaper may be generated based on scene information obtained after the scenario change, the preset image, and the image style type, to display, in the new scenario, a new wallpaper associated with the new scenario. For example, when the user moves from a beach scenario to a city scenario, because wallpapers stored in a gallery are all wallpapers generated based on the beach scenario of the user, and do not conform to the city scenario in which the user is located, the wallpapers in the gallery need to be updated. Therefore, a plurality of new wallpapers, namely, wallpapers that conform to the city scenario, are generated based on the city scenario, a wallpaper preset on an interface, and the image style type, and are displayed when wallpaper display events are subsequently responded to. This improves accuracy of subsequent wallpaper display.

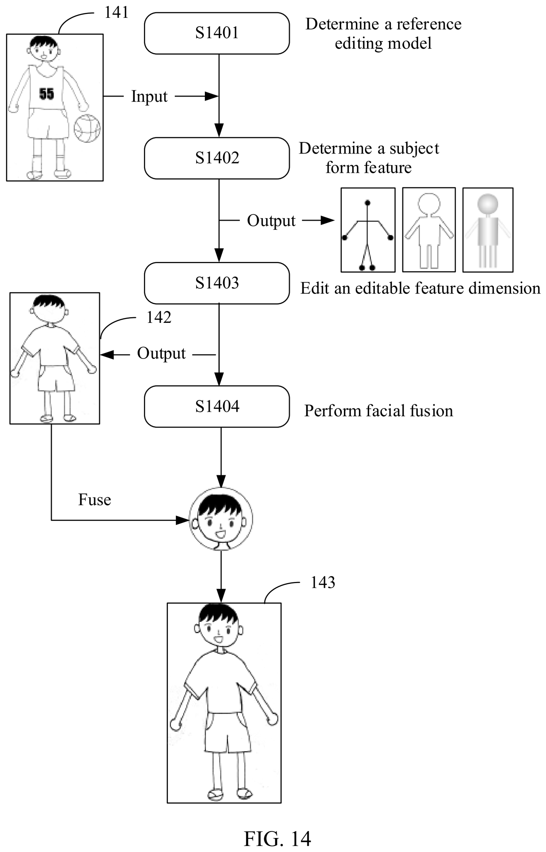

For example, FIG. 14 is a specific implementation flowchart of generating a wallpaper with a specified image style type according to an embodiment of this application. Refer to FIG. 14. When a first feature dimension includes a facial feature dimension and a subject form dimension, an image style editing process may specifically include the following steps.

S1401: Determine a reference editing model based on an image style type.

In this embodiment, the electronic device may store reference editing models corresponding to different image style types. The reference editing model is used to determine an image style of a to-be-generated wallpaper, for example, a dopamine style, a sports style, and an ancient style.

S1402: Determine a subject form feature of a preset image (namely, an image 141) in the subject form dimension according to an object subject identification algorithm. For a specific manner of obtaining the subject form feature, refer to the foregoing descriptions. Details are not described herein again.

S1403: Generate, based on scene information and the reference editing model, a feature in a changeable feature dimension.

In this embodiment, the electronic device may determine an image style range of the to-be-generated wallpaper based on the scene information, the preset image, and the image style type. The image style range may include a plurality of dimensions: a foreground object description dimension, a variable parameter dimension, and the image style type.

The foreground object description dimension may be obtained by performing image semantic analysis on a foreground object in the preset image, for example, determining a posture type, a face orientation, and an emotion status of the foreground object.

The changeable feature dimension includes but is not limited to a clothing dimension, a color dimension, an expression dimension, and the like. The scene information may make contributions to the changeable feature dimension. For example, location information in the scene information may be used to determine the clothing dimension in the changeable feature dimension. For example, some regions have corresponding national clothing. Weather environment information may also affect the color dimension and the expression dimension. For example, in sunny weather, a color is bright and an expression is happy. Time information may affect the color dimension. For example, a bright tone is used at daytime, and a dark tone is used at night.

In this embodiment, when it is ensured that the subject form feature remains unchanged, features of the foreground object in a plurality of changeable feature dimensions are generated to obtain an image 142.

S1404: Based on facial features of the foreground object in the image 141 in the facial feature dimension, fuse the facial features into the image 142 to generate an image 143.

In this embodiment, the electronic device may add the facial features associated with the foreground object to the generated image 142, to obtain a new wallpaper, namely, the image 143. For a manner of obtaining the facial features, refer to the foregoing descriptions. Details are not described herein again.

In this embodiment, a background picture in the new wallpaper may be determined based on the image style type. For example, if the image style type is an ancient style type, the background picture in the new wallpaper may include a building having an ancient Chinese architectural style. For example, a first wallpaper may include a building of the Tang Dynasty, and a second wallpaper may include a building of the Song Dynasty.

In a possible implementation, the background picture in the new wallpaper may be determined based on the scene information and the image style type. For example, the background picture in the displayed wallpaper is determined based on the location information in the scene information. For example, if a user is on a snow mountain, the background picture may include the snow mountain. If the user is on a beach, the background picture may include the beach.

In this embodiment, the new wallpaper can be generated by performing fusion based on the generated foreground object and the generated background picture. A feature of the generated foreground object in the first feature dimension is determined based on a feature of the foreground object in the preset image in the first feature dimension.

In this embodiment, after setting the image style type and the wallpaper on the interface, the electronic device can generate the plurality of new wallpapers, and when a wallpaper display event is subsequently detected, one of the plurality of pre-generated new wallpapers can be selected for display, so that different wallpapers can be displayed in response to wallpaper display events at different moments, and display smoothness can be improved. Certainly, in addition to being pre-generated, the new wallpaper may alternatively be generated in real time. Details are specifically described in subsequent content.

### Display phase:

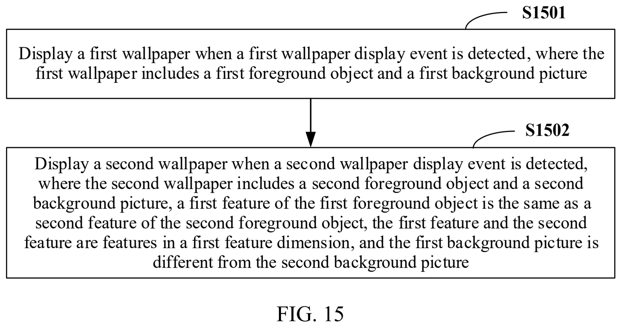

For example, FIG. 15 is an implementation flowchart of a display phase in a wallpaper display method according to an embodiment of this application. As shown in FIG. 15, a specific implementation process of the display phase of the wallpaper display method is described as follows:
S1501: Display a first wallpaper when a first wallpaper display event is detected.
S1502: Display a second wallpaper when a second wallpaper display event is detected.

In this embodiment, when detecting a wallpaper display event, an electronic device may display, on a corresponding display, an interface including a generated wallpaper. For example, the first wallpaper is displayed when the first wallpaper display event is detected, and the second wallpaper is displayed when the second wallpaper display event is detected. The first wallpaper includes a first foreground object and a first background picture, the second wallpaper includes a second foreground object and a second background picture, a first feature of the first foreground object is the same as a second feature of the second foreground object, the first feature and the second feature are features in a first feature dimension (such as the facial features in the facial feature dimension and the subject form features in the subject form dimension described above), and the first background picture is different from the second background picture. This implements dynamic adjustment of an interface wallpaper.

In a possible implementation, the first wallpaper and the second wallpaper may be generated based on a preset image and an image style type when the wallpaper on the interface of the display is set. For a specific generation process, refer to the foregoing content. Details are not described herein again.

During displaying, a location of the first foreground object in the first wallpaper may be the same as or different from a location of the second foreground object in the second wallpaper.

For example, the wallpaper display event may be specifically classified into at least the following three display scenarios:

### Scenario 1: a screen-on event triggered by a tap operation

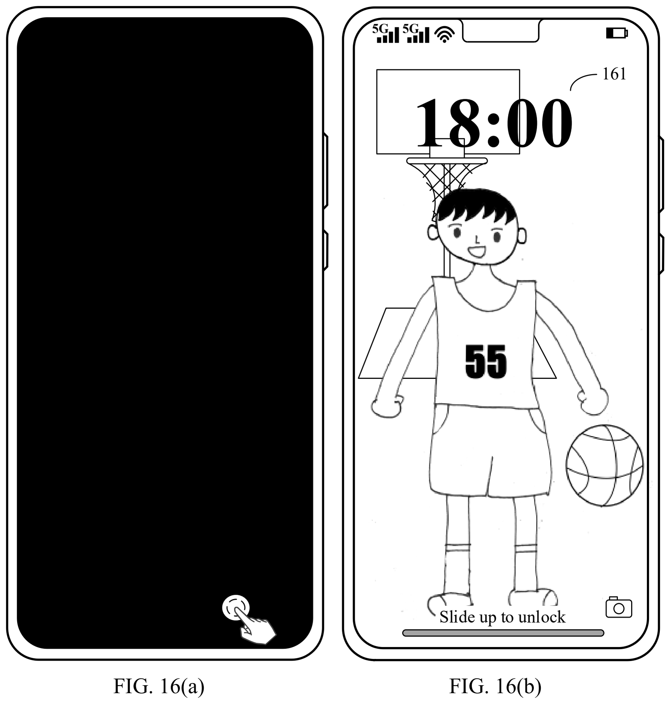

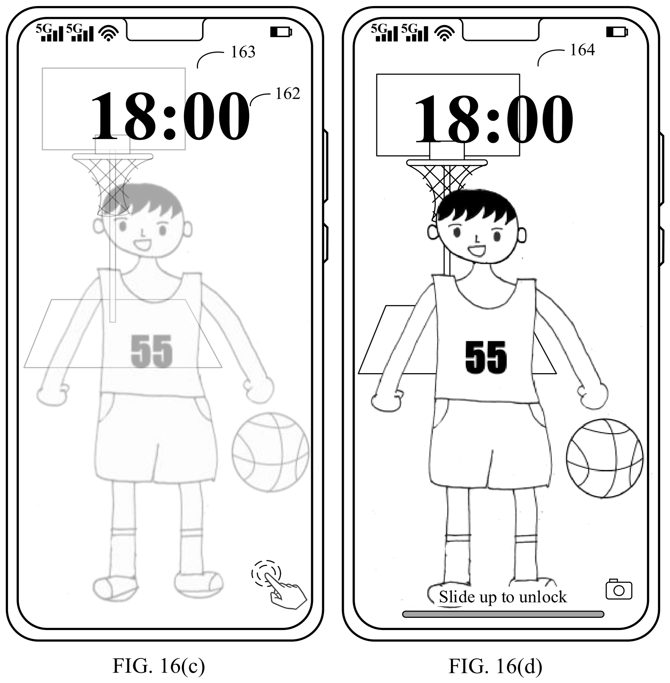

In this embodiment, a corresponding wallpaper image, namely, the preset image, is set on a lock screen of the electronic device. When the electronic device is in a screen-off state or an always-on display state, if it is detected that a user taps the display or taps a power button (or another physical button that turns on the display) on the electronic device, the display may be turned on, and the lock screen is displayed. For example, FIG. 16(a) to FIG. 16(d) are a diagram of a screen-on process triggered by a tap operation according to an embodiment of this application. Refer to FIG. 16(a). The display of the electronic device is in the screen-off state, that is, no content is displayed, and an interface is in an invisible state. In this case, when the user taps the display (for example, taps an area other than an in-display fingerprint identification area), the electronic device detects the tap operation initiated by the user, wakes up the display, and displays the lock screen on the display as shown in FIG. 16(b). A wallpaper (a preset image) that is set by the user, namely, an image 161, may be displayed on the lock screen. If the electronic device supports always-on display, when the electronic device is in the screen-off state, a corresponding always-on display interface is displayed on the display, as shown in FIG. 16(c). On the always-on display interface, a clock control 162 may be displayed, and a wallpaper (namely, a preset image) that is set by the user, namely, an image 163, may be further displayed. Similarly, if the user initiates a screen-on operation, the electronic device turns on the display in the always-on display state, and displays a corresponding lock screen, as shown in FIG. 16(d). In addition, the wallpaper (namely, the image 163) in the screen-off state is the same as a wallpaper (namely, an image 164) on the lock screen after the screen is turned on. In the conventional technology, a same wallpaper image is displayed on the lock screen each time the user turns on the display. For an interface that does not support always-on display, the same image 161 is displayed each time the display is turned on, or prestored images in a gallery are randomly switched in sequence, resulting in interface inconsistency. For an always-on display interface, the image 164 that is the same as the image 163 is displayed each time the screen-off display is turned on, and the same problem exists.

To resolve a problem that when the screen-off state is changed to the screen-on state, interface consistency and wallpaper recommendation accuracy cannot be simultaneously considered during wallpaper switching on the lock screen, the electronic device may change a style of a wallpaper that is on the lock screen and that corresponds to a screen-on trigger event, that is, the preset image may be the image 161 and the image 163.

In a possible implementation, an occasion for generating the new wallpaper may be when the user turns on the screen. In other words, when detecting the screen-on trigger event, the electronic device may generate the new wallpaper based on the preset image style type and the preset image that is set on the lock screen. Optionally, the electronic device may further obtain scene information corresponding to a moment of the screen-on trigger event, and generate the new wallpaper based on the preset image style type, the scene information, and the preset image that is set on the lock screen.

### Scenario 2: a screen-on event triggered by a folding status change

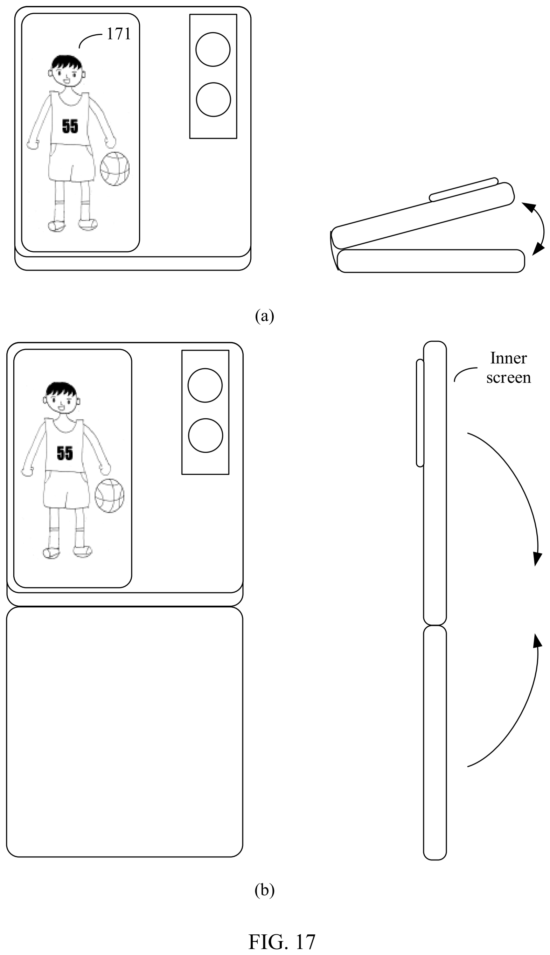

In this embodiment, the electronic device is a foldable device, and the electronic device includes at least two displays, which are respectively a foldable screen (referred to as an inner screen for short) and a non-foldable screen (referred to as an outer screen for short). For example, FIG. 17 is a diagram of a folding status change of a foldable device according to an embodiment of this application. Refer to (a) in FIG. 17. The foldable device is in a folded state. In this case, because the inner screen is folded, the inner screen does not display any content. When the outer screen is in a visible state, the outer screen may be in one of an always-on display state, a screen-off state, or a screen-on state. Specifically, a display state of the outer screen may be determined based on a use state of a user. In this case, if the user unfolds the foldable device, the foldable device is switched from the folded state to an unfolded state, as shown in (b) in FIG. 17. When the foldable device is in the unfolded state, the inner screen may be changed from the screen-off state to the screen-on state. Correspondingly, the outer screen may be specifically in one of the always-on display state, the screen-off state, or the screen-on state.

In this embodiment, when a folding status of the foldable device is changed, at least one screen of the outer screen or the inner screen is turned on. For example, when the folded state is changed to the unfolded state, the inner screen may be turned on, or the outer screen may be turned on at the same time; and when the unfolded state is changed to the folded state, the outer screen may be turned on. When the folding status of the foldable device is changed, a corresponding interface may be displayed on a turned-on display, and a corresponding wallpaper image (namely, a preset image) may be set on the interface. In the conventional technology, a same wallpaper is displayed on the interface of the display each time the interface of the display is turned on. This reduces interest and diversity of the display interface.

To resolve a problem that the wallpaper on the interface does not automatically change when the folding status is changed, in this embodiment of this application, the wallpaper on the interface of the turned-on display may be changed when a folding status change event is detected, that is, the preset image may be the wallpaper image that is on the interface on the turned-on display and that is used when the folding status is changed, for example, an image 171 shown in (a) in FIG. 17.

In a possible implementation, if the folding status change is changing from an inner screen-folded state to an inner screen-unfolded state, the preset image may be a wallpaper image on a lock screen of the inner screen.

In a possible implementation, an occasion for generating the new wallpaper may be when the folding status is changed, that is, when detecting a folding status change-based screen-on event, the electronic device may generate the new wallpaper based on a preset image style type and a wallpaper preset on the display. Optionally, the electronic device may further obtain corresponding scene information of the folding status change, and generate new wallpapers (namely, a first wallpaper and a second wallpaper) based on the preset image style type, the scene information, and the wallpaper preset on the display.

### Scenario 3: an incoming call trigger event

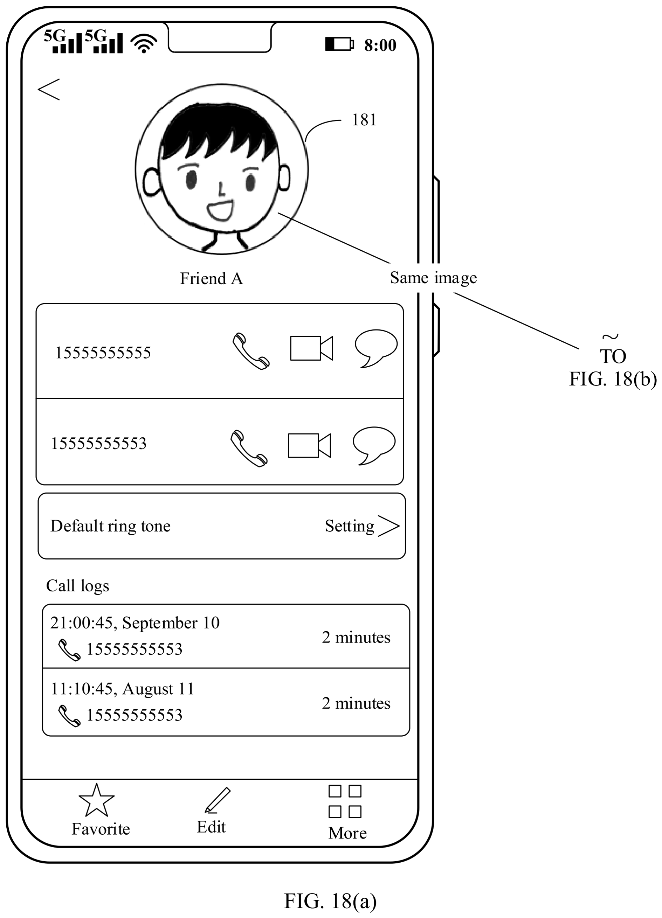

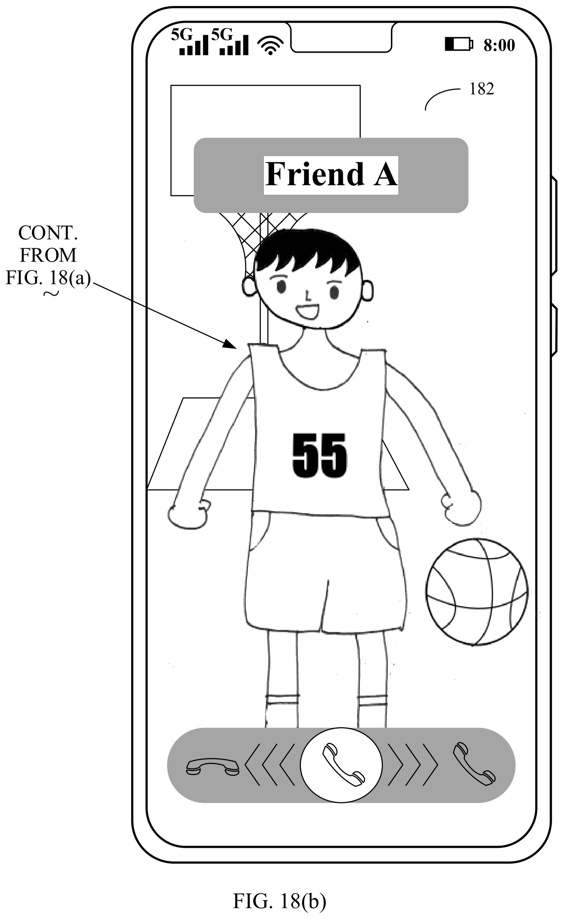

In this embodiment, in a process of using an electronic device, if an incoming call request is received, a corresponding incoming call event is generated. When detecting the incoming call event, the electronic device may generate a corresponding incoming call interface on a display, so that a user selects an operation such as answering an incoming call or declining an incoming call. For example, FIG. 18(a) and FIG. 18(b) are a diagram of an incoming call interface according to an embodiment of this application. Refer to FIG. 18(a). The user may configure corresponding contact portraits for different contacts. For example, for a friend A, a portrait image including the friend A may be selected from a gallery as a contact portrait associated with the user A, namely, an image 181. A contact interface may further record a phone number corresponding to the contact. If an incoming call event initiated by the contact is received, an incoming call interface about the contact may be displayed on the display, as shown in FIG. 18(b). Because the associated contact portrait is set for the friend A, to improve visualization of the incoming call interface and quickly determine an incoming call object, in addition to that a name of the contact can be displayed, the contact portrait corresponding to the contact may be further set as a wallpaper on the incoming call interface, namely, an image 182. If the user does not actively change the contact portrait associated with the contact, each time the friend A makes an incoming call, the wallpaper on the incoming call interface of the electronic device is the image 182. This reduces interest and diversity of the display interface.

To resolve a problem that the contact portrait on the incoming call interface does not automatically change, in this embodiment of this application, a style change may be performed on the contact portrait that is set on the incoming call interface, that is, the preset image may be the contact portrait corresponding to the contact on an incoming call notification interface, namely, an image 182.

In a possible implementation, an occasion for generating the new wallpaper may be when the contact makes the incoming call, that is, when detecting the incoming call event, the electronic device may generate the new wallpaper based on the preset image style type and the contact portrait that is about the contact and that is set by the user. Optionally, the electronic device may further obtain scene information corresponding to a moment of the incoming call event, and generate the new wallpaper based on the preset image style type, the scene information, and the contact portrait.

In a possible implementation, the scene information may be scene information of a scenario in which the contact of the incoming call is located, so that the generated wallpaper can reflect the scenario in which the contact is located. This improves consistency between a foreground object in the generated wallpaper and an actual user.

In the display phase, one of the two display manners: static display and dynamic display may be used.

If the electronic device uses static display, the wallpaper (for example, the first wallpaper and the second wallpaper) is directly displayed in response to the wallpaper display event. This manner is applicable to a scenario in which the display is in the screen-off state before responding to the wallpaper display event, for example, the screen-on event triggered by the folding status change and the incoming call event. If the display is in the screen-off state, the static display manner may also be used for the screen-on event triggered by the tap operation.

If the electronic device uses the dynamic display manner, when responding to the wallpaper display event, the electronic device may first display a corresponding wallpaper switching animation, and after the wallpaper switching animation is played, display the corresponding new wallpaper (for example, the first wallpaper and the second wallpaper). An end frame of the wallpaper switching animation is the new wallpaper, is the first wallpaper for the first wallpaper display event, and is the second wallpaper for the second wallpaper display event. This manner is applicable to a case in which the display is in the always-on display state before the electronic device responds to the wallpaper display event, and the wallpaper display event is the screen-on event triggered by the tap operation.

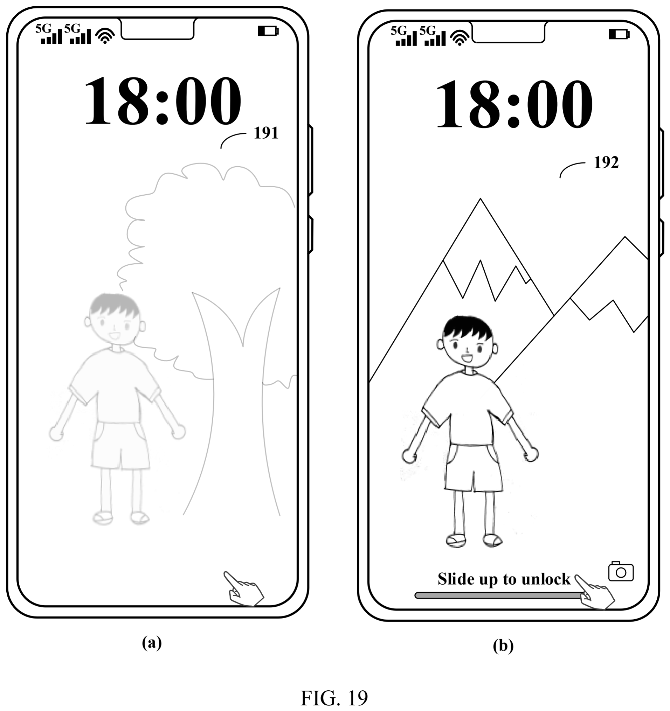

For example, FIG. 19 is a diagram of background editing-based wallpaper switching according to an embodiment of this application. Refer to (a) in FIG. 19. An electronic device is in an always-on display state, an image 191 is used as a wallpaper on a lock screen, and the image 191 is displayed on a display in a form of low brightness and low contrast. When s user taps the display, the display is turned on. The electronic device performs style change on a background picture in the image 191. For example, if a current location of the user is on a snow mountain, a background may be switched to a snow mountain, so that an image after switching is consistent with the location of the user, association between a wallpaper after switching and the user is improved, and a lock screen shown in (b) in FIG. 19 is obtained. A wallpaper on the lock screen is an image 192, and a foreground object in the image 192 is the same as a foreground object in the image 191, so that consistency between lock screens can be ensured. However, background pictures in the image 191 and the image 192 are different to some extent, and style editing and change can be performed based on image style information, thereby improving interface diversity. If the user taps the interface next time, and the location of the user is on a beach, the background picture may be set as a beach.

Because background pictures in the preset image and the new wallpaper are different, to improve smoothness of image transition, the electronic device may generate a corresponding switching animation. When responding to a wallpaper display event, the electronic device may display the switching animation on an interface corresponding to the display, to implement smooth transition of the wallpaper on the interface from the preset image to the new wallpaper, thereby improving smoothness of image switching and improving user experience.

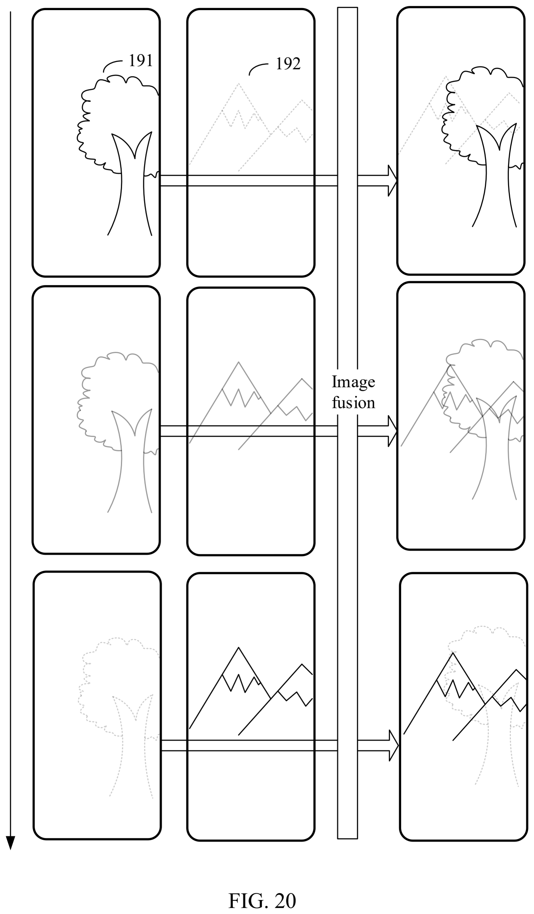

The switching animation may be a gradient switching animation, that is, the background picture in the preset image exits the interface in a gradient fade-out manner, and the background picture in the new wallpaper appears on the interface in a gradient fade-in manner. For example, FIG. 20 is a diagram of displaying a switching animation according to an embodiment of this application. Refer to FIG. 20. The image 191 gradually fades over time, and the image 192 gradually becomes apparent over time, thereby implementing gradual change of the background picture.

In a possible implementation, because postures of foreground objects in the preset image and the new wallpaper are different, to improve smoothness of image transition, the electronic device may generate a corresponding switching animation based on the posture of the foreground object in the preset image and the posture of the foreground object in the new wallpaper (for example, the first foreground object in the first wallpaper). When responding to the wallpaper display event, the switching animation may be displayed on the interface corresponding to the display, to implement smooth transition of the wallpaper on the interface changing from the preset image to the new wallpaper, thereby improving smoothness of image switching and improving user experience.

In a possible implementation, the switching animation may be a gradient switching animation, that is, the foreground object in the preset image exits the interface in a gradient fade-out manner, and the foreground object in the new wallpaper appears on the interface in a gradient fade-in manner. For a specific implementation process of the gradient switching of the foreground object, refer to the implementation process of the gradient switching of the background picture. This is limited herein.

In a possible implementation, if the posture of the foreground object in the preset image is different from the posture of the foreground object in the new wallpaper (for example, the first foreground object in the first wallpaper), for example, a posture of the left hand changes, or a torso orientation changes, to improve smoothness of wallpaper switching, the electronic device may determine a posture animation parameter based on the posture of the foreground object in the preset image and the posture of the foreground object in the new wallpaper, generate a corresponding wallpaper switching animation based on the posture animation parameter, and play the wallpaper switching animation on the interface when responding to the wallpaper display event. Therefore, switching from the preset image to a second image is implemented.

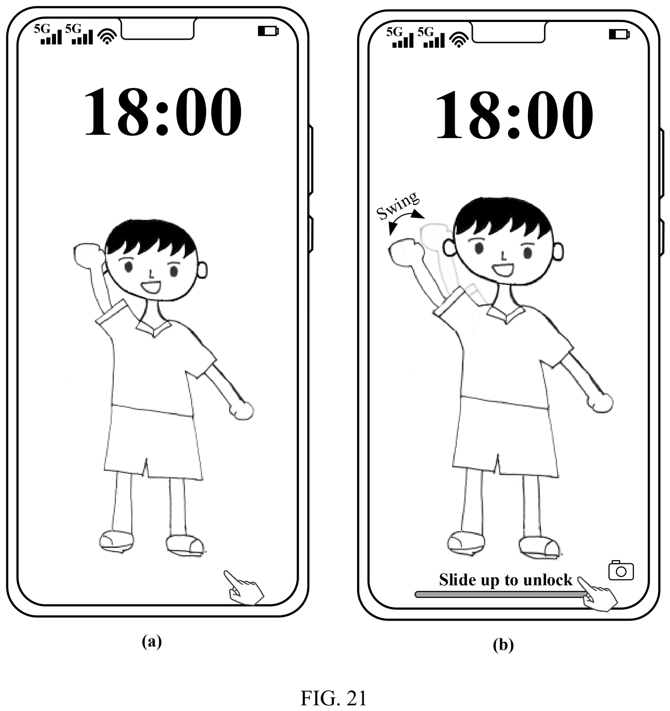

For example, FIG. 21 is a diagram of a wallpaper switching animation according to an embodiment of this application. Refer to (a) in FIG. 21. The interface is an always-on display interface, and in a wallpaper image (namely, a preset image) that is set on the always-on display interface, a hand of a foreground object is in a vertical lifting state. After a second image is obtained by performing style editing on the foreground object, a hand of a foreground object in the second image is in a state of lifting at an angle toward an upper left corner, and postures of other parts remain unchanged. In this case, the electronic device obtains posture animation parameters of the hands of the foreground objects in the two images, for example, image coordinates corresponding to key nodes of the hands in the two images. A corresponding wallpaper switching animation is generated based on the posture animation parameters, to implement smooth transition from the vertical lifting state to the state of lifting at the angle toward the upper left corner. As shown in (b) in FIG. 21, a manner of swinging an arm is used as the wallpaper switching animation, thereby improving aesthetics and smoothness of wallpaper switching.

In embodiments of this application, style editing is performed on the foreground object in the preset image in some feature dimensions, so that the foreground object has a strong correlation with the image style information, and each wallpaper obtained through switching has a clear style theme. When style editing is performed on the foreground object, a similarity between two images in the first feature dimension is maintained, and consistency of the entire interface can be maintained to a large extent.

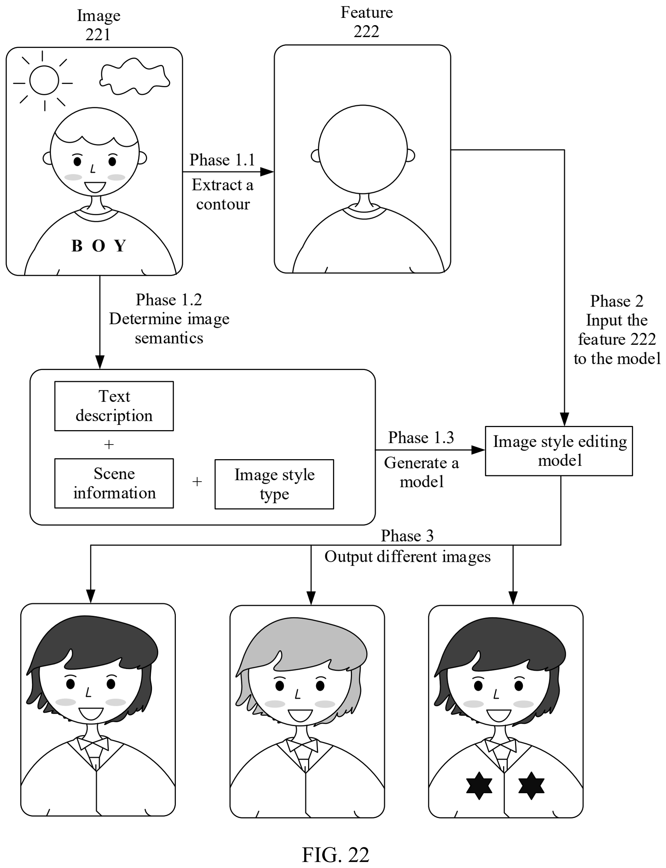

For example, FIG. 22 is an implementation flowchart of simultaneously performing style change on a foreground object and a background picture according to an embodiment of this application. The process can be divided into the following phases:
Phase 1.1: An electronic device may input a preset image (namely, an image 221) into a preset object subject identification algorithm, to obtain a subject form feature, namely, a feature 222, of the preset image in a subject form dimension.
Phase 1.2: Input the preset image into a preset image semantic identification algorithm, understand image semantics of the preset image, obtain a text description about the preset image, and add the text description as extended information to image style information.
Phase 1.3: Import the image style information and the text description into a preset reference editing model, to obtain a corresponding image style editing model of this time.
Phase 2: Import a feature 222 (namely, a feature used to determine a first feature dimension that remains unchanged) into the image style editing model, to generate a feature in a changeable feature dimension.
Phase 3: When different wallpaper display events are performed, generate a plurality of different types of new wallpapers based on a same preset image. Because an input for generating the image style editing model includes scene information and description information related to a foreground object in the preset image, data fusion in two dimensions: the foreground object and the scene information can be implemented, so that the image style editing model can more accurately generate a plurality of features in the changeable feature dimension. In addition, randomness is maintained to some extent, so that new wallpapers output at different moments can be randomized to some extent, and diversity of output images is improved.

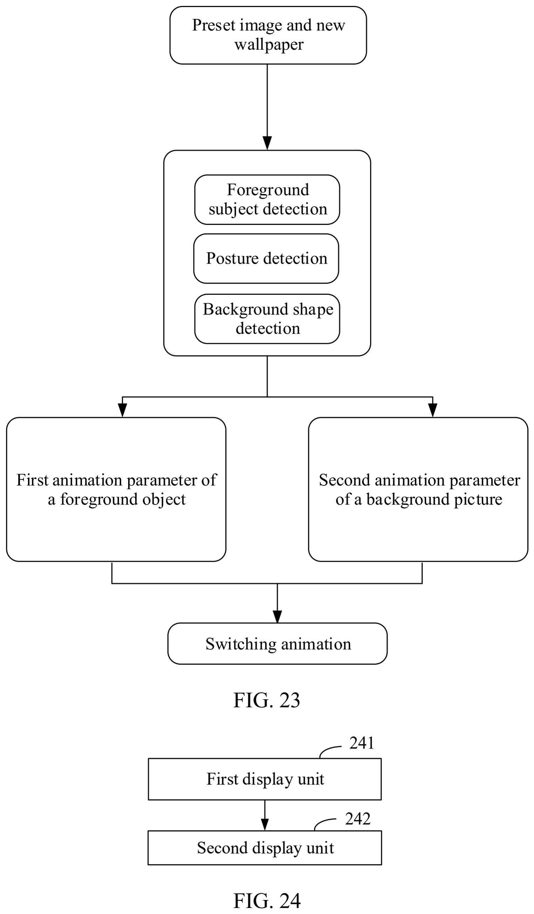

For example, FIG. 23 is a diagram of generating a switching animation according to an embodiment of this application. Refer to FIG. 23. An electronic device may input a preset image and a newly generated wallpaper into a preset animation parameter identification model, and separately perform foreground subject detection, posture detection, and background shape detection, to obtain a first animation parameter of a foreground object and a second animation parameter of a background picture based on a deviation between the two images in the three dimensions.

For the first animation parameter of the foreground object, a posture change animation may be determined based on an animation mode corresponding to an image style type and the first animation parameter, to generate a foreground change animation of the foreground object. If a posture difference between foreground objects in the two images is small, the switching animation may be generated in a gradient manner; or if the posture difference is large, a posture change animation may be generated for a part that has a large posture change.

For the second animation parameter of the background picture, a background gradient animation may be determined based on the animation mode corresponding to the image style type and the second animation parameter, to generate a background change animation of the background picture.

Finally, the two animations are fused, to obtain a switching animation in which the preset image is changed to a second image.

It can be learned from the foregoing that in the image processing method provided in embodiments of this application, the electronic device may display different wallpapers when responding to wallpaper display events at different moments, and foreground objects of different wallpapers have a same feature in the first feature dimension. Therefore, when a wallpaper on an interface on the electronic device is dynamically adjusted, consistency between interfaces at different moments can be maintained. In comparison with an existing wallpaper management method, in this embodiment of this application, wallpapers displayed on a same interface at different moments do not affect consistency of the interface while foreground objects in the wallpapers displayed at different moments maintain the same feature in the first feature dimension. Therefore, it can be ensured that wallpapers obtained through switching have similar foreground objects, a large difference between display effect of the interfaces after changing is avoided, and interest of the wallpaper on the interface can be improved. This improves user experience.

Corresponding to the wallpaper display method in the foregoing embodiments, FIG. 24 is a block diagram of a structure of a wallpaper display apparatus according to an embodiment of this application. For ease of description, only a part related to embodiments of this application is shown.

Refer to FIG. 24. The wallpaper display apparatus includes:
a first display unit 241, configured to display a first wallpaper when a first wallpaper display event is detected, where the first wallpaper includes a first foreground object and a first background picture; and
a second display unit 242, configured to display a second wallpaper when a second wallpaper display event is detected, where the second wallpaper includes a second foreground object and a second background picture, a first feature of the first foreground object is the same as a second feature of the second foreground object, the first feature and the second feature are features in a first feature dimension, and the first background picture is different from the second background picture.

Optionally, in a possible implementation of the second aspect, the first feature dimension includes a facial feature dimension and/or a subject form dimension.

Optionally, the first wallpaper display event and the second wallpaper display event are specifically either screen-on event or incoming call event.

Optionally, an image style type of the first wallpaper is the same as an image style type of the second wallpaper.

Optionally, the image style type includes at least one of a dopamine style, an ancient style, a retro style, and an underwater style.

Optionally, the apparatus further includes:
a first wallpaper generation unit, configured to generate the first wallpaper based on the preset image and the image style type; and
a second wallpaper generation unit, configured to generate the second wallpaper based on the preset image and the image style type.

Optionally, the apparatus further includes:
a wallpaper setting unit, configured to: generate the first wallpaper and the second wallpaper based on the preset image and the image style type in response to an operation of setting the preset image as a wallpaper.

Optionally, the apparatus further includes:
a scenario triggering unit, configured to: if a scene change event is detected, generate a third wallpaper based on scene information corresponding to the scene change event, the preset image, and the image style type; and
a third display unit, configured to display the third wallpaper when a third wallpaper display event is detected.

Optionally, the wallpaper generation unit includes:
a first display generation unit, configured to: generate the first wallpaper based on the preset image and the image style type in response to the first wallpaper display event; and
a second display generation unit, configured to: generate the second wallpaper based on the preset image and the image style type in response to the second wallpaper display event.

Optionally, the first display generation unit is specifically configured to: in response to the first wallpaper display event, generate the first wallpaper based on the preset image, the image style type, and scene information corresponding to the first wallpaper display event.

Optionally, the second display generation unit is specifically configured to: in response to the second wallpaper display event, generate the second wallpaper based on the preset image, the image style type, and scene information corresponding to the second wallpaper display event.

Optionally, the scene information includes at least one of time information, location information, weather information, a motion status, and user status information.

Optionally, if the first wallpaper display event and the second wallpaper display event are screen-on events, the preset image is a preset wallpaper that is set on a display.

Optionally, if the first wallpaper display event and the second wallpaper display event are incoming call events, the preset image is a contact image corresponding to a contact of the incoming call events.

Optionally, the wallpaper generation unit includes:
a first feature determining unit, configured to determine the first feature based on the preset image; and
a first feature fusion unit, configured to generate the first wallpaper based on the image style type and the first feature.

Optionally, if the first feature dimension includes a facial feature dimension, the first feature determining unit includes:
a face replacement unit, configured to extract a first facial feature in the preset image as the first feature.

Optionally, if the first feature dimension is a facial feature dimension, the first feature determining unit includes:
a face library extracting unit, configured to: obtain, from a pre-trained face library, a second facial feature corresponding to a third foreground object included in the preset image; and
a facial feature generation unit, configured to obtain the first feature based on the second facial feature and a first facial feature in the preset image.

Optionally, if the first feature dimension includes a subject form feature dimension, the first feature determining unit includes:
a skeletal posture fusion unit, configured to determine the first feature based on skeletal posture information of the third foreground object in the preset image.

Optionally, the skeletal posture determining unit includes:
a related information fusion unit, configured to determine the first feature based on the skeletal posture information and at least one of contour information and depth information of the third foreground object in the preset image.

Optionally, the first wallpaper display event is the screen-on event, and the apparatus further includes:
an always-on display unit, configured to display the preset image in an always-on display state; and
the first display unit includes:
   an animation display unit, configured to: display a wallpaper switching animation when the first wallpaper display event is detected, and display the first wallpaper when the wallpaper switching animation ends, where the wallpaper switching animation is generated based on the preset image and the first wallpaper.

Optionally, the apparatus further includes:
a posture animation parameter determining unit, configured to: if a posture of the third foreground object in the preset image is different from a posture of the first foreground object, determine a posture animation parameter based on the posture of the third foreground object and the posture of the first foreground object; and
a posture animation generation unit, configured to generate the wallpaper switching animation based on the posture animation parameter.

Optionally, a third feature of the first foreground object is different from a fourth feature of the second foreground object, the third feature and the fourth feature are features in a second feature dimension, and the second feature dimension is a feature dimension different from the first feature dimension.

Optionally, the second feature dimension includes at least one of a clothing dimension, a hairstyle dimension, and an expression dimension.

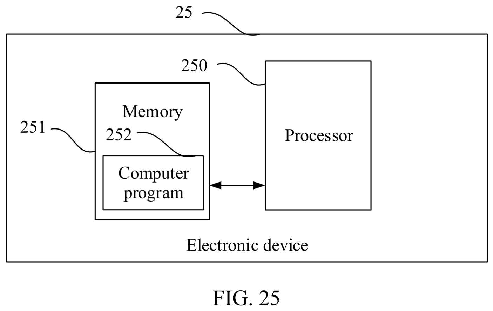

FIG. 25 is a diagram of a structure of an electronic device according to an embodiment of this application. As shown in FIG. 25, an electronic device 25 in this embodiment includes: at least one processor 250 (where only one processor is shown in FIG. 25), a memory 251, and a program 252 that is stored in the memory 251 and that can be run on the at least one processor 250. When executing the program 252, the processor 250 implements the steps in any one of the foregoing wallpaper display method embodiments.

The electronic device 25 may be, for example, a desktop computer, a notebook computer, a palmtop computer, and a cloud server. The electronic device may include but is not limited to the processor 250 and the memory 251. Persons skilled in the art may understand that FIG. 25 is merely an example of the electronic device 25, and does not constitute a limitation on the electronic device 25. The electronic device 25 may include more or fewer components than those shown in the figure, or may combine some components, or may have different components. For example, the electronic device 25 may further include an input/output electronic device, a network access electronic device, or the like.

The processor 250 may be a central processing unit (Central Processing Unit, CPU). The processor 250 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, a discrete hardware component, or the like. The general-purpose processor may be a microprocessor, or the processor may be any conventional processor or the like.

In some embodiments, the memory 251 may be an internal storage unit of the electronic device 25, for example, a hard disk or an internal memory of the electronic device 25. In some other embodiments, the memory 251 may alternatively be an external storage electronic device of the electronic device 25, for example, a plug-in hard disk, a smart media card (Smart Media Card, SMC), a secure digital (Secure Digital, SD) card, or a flash card (Flash Card) that is disposed on the electronic device 25. Further, the memory 251 may include both an internal storage unit and an external storage electronic device of the electronic device 25. The memory 251 is configured to store an operating system, an application, a boot loader (Boot Loader), data, another program, and the like, for example, program code of the program. The memory 251 may be further configured to temporarily store data that has been output or is to be output.

It should be noted that content such as information exchange and execution processes between the foregoing apparatuses/units are based on a same concept as those in the method embodiments of this application. For specific functions and brought technical effect of the foregoing apparatuses/units, refer to the method embodiments. Details are not described herein again.

Persons skilled in the art may clearly understand that, for the purpose of convenient and brief description, division into the foregoing functional units and modules is merely used as an example for description. In an actual application, the foregoing functions may be allocated to different functional units and modules for implementation based on a requirement. In other words, an inner structure of the apparatus is divided into different functional units or modules, to implement all or some of the functions described above. Functional units or modules in embodiments may be integrated into one processing unit, or each of the units may exist alone physically, or two or more units may be integrated into one unit. The integrated unit may be implemented in a form of hardware, or may be implemented in a form of software functional unit. In addition, specific names of the functional units or modules are merely for ease of distinguishing between the functional units or modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes: at least one processor, a memory, and a computer program that is stored in the memory and that can be run on the at least one processor. When executing the computer program, the processor implements the steps in any one of the foregoing method embodiments.

An embodiment of this application further provides a readable storage medium. The readable storage medium stores a program. When the program is executed by a processor, the processor can implement the steps in the foregoing method embodiments.

An embodiment of this application provides a program product. When the program product runs on an electronic device, the electronic device is enabled to implement the steps in the foregoing method embodiments when executing the computer program product.

When the integrated unit is implemented in the form of software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code, and the computer program code may be in a source code form, an object code form, an executable file, an intermediate form, or the like. The computer-readable medium may include at least any entity or apparatus that can carry the computer program code to a photographing apparatus/electronic device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium cannot be an electrical carrier signal or a telecommunication signal according to legislation and patent practices.

In the foregoing embodiments, descriptions of each embodiment have respective focuses. For a part that is not described in detail or recorded in an embodiment, refer to related descriptions in another embodiment.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A wallpaper display method, comprising:
displaying a first wallpaper when a first wallpaper display event is detected, wherein the first wallpaper comprises a first foreground object and a first background picture; and
displaying a second wallpaper when a second wallpaper display event is detected, wherein the second wallpaper comprises a second foreground object and a second background picture, a first feature of the first foreground object is the same as a second feature of the second foreground object, the first feature and the second feature are features in a first feature dimension, and the first background picture is different from the second background picture.

2. The method according to claim 1, wherein the first feature dimension comprises a facial feature dimension and/or a subject form dimension.

3. The method according to claim 1 or 2, wherein the first foreground object and the second foreground object are generated based on a third foreground object in a same preset image.

4. The method according to claim 2, wherein the third foreground object is a person or an animal in the preset image; and a facial image of the first foreground object and a facial image of the second foreground object are generated based on a facial image of the third foreground object.

5. The method according to claim 2, wherein a subject form of the first foreground object and a subject form of the second foreground object are determined based on a subject form of the third foreground object.

6. The method according to any one of claims 1 to 5, wherein a third feature of the first foreground object is different from a fourth feature of the second foreground object, the third feature and the fourth feature are features in a second feature dimension, and the second feature dimension is a feature dimension different from the first feature dimension.

7. The method according to claim 6, wherein the second feature dimension comprises at least one of a clothing dimension, a hairstyle dimension, and an expression dimension.

8. The method according to any one of claims 1 to 6, wherein an image style type of the first wallpaper is the same as an image style type of the second wallpaper.

9. The method according to claim 8, wherein the first wallpaper and the second wallpaper are wallpapers that are generated based on a first image style type and that have the same image style type.

10. The method according to claim 9, wherein before displaying the first wallpaper when the first wallpaper display event is detected, the method further comprises:
generating the first wallpaper based on the preset image and the first image style type; and
before displaying the second wallpaper when the second wallpaper display event is detected, the method further comprises:
generating the second wallpaper based on the preset image and the first image style type.

11. The method according to claim 10, wherein generating the first wallpaper based on the preset image and the image style type, and generating the second wallpaper based on the preset image and the first image style type comprise:
generating the first wallpaper and the second wallpaper based on the preset image and the first image style type in response to an operation of setting the preset image as a wallpaper.

12. The method according to claim 11, wherein after generating the first wallpaper and the second wallpaper based on the preset image and the first image style type in response to the operation of setting the preset image as the wallpaper, the method further comprises:
if a scene change event is detected, generating a third wallpaper based on scene information corresponding to the scene change event, the preset image, and the first image style type; and
displaying the third wallpaper when a third wallpaper display event is detected.

13. The method according to claim 10, wherein generating the first wallpaper and the second wallpaper based on the preset image and the first image style type comprises:
generating the first wallpaper based on the preset image and the first image style type in response to the first wallpaper display event; and
generating the second wallpaper based on the preset image and the first image style type in response to the second wallpaper display event.

14. The method according to claim 13, wherein generating the first wallpaper based on the preset image and the first image style type in response to the first wallpaper display event comprises:
in response to the first wallpaper display event, generating the first wallpaper based on the preset image, the first image style type, and scene information corresponding to the first wallpaper display event.

15. The method according to claim 13 or 14, wherein generating the second wallpaper based on the preset image and the first image style type in response to the second wallpaper display event comprises:
in response to the second wallpaper display event, generating the second wallpaper based on the preset image, the first image style type, and scene information corresponding to the second wallpaper display event.

16. The method according to claim 12, 14, or 15, wherein the scene information comprises at least one of time information, location information, weather information, a motion status, and user status information.

17. The method according to claim 10, wherein generating the first wallpaper based on the preset image and the image style type comprises:
determining the first feature based on the preset image; and
generating the first wallpaper based on the image style type and the first feature, wherein the first object in the generated first wallpaper has the first feature.

18. The method according to claim 17, wherein the preset image comprises a third foreground object, the third foreground object is a person or an animal, and determining the first feature based on the preset image comprises:
extracting a first facial feature of the third foreground object in the preset image as the first feature; or
obtaining, from a pre-trained face library, a second facial feature corresponding to the third foreground object comprised in the preset image, and obtaining the first feature based on the second facial feature and a first facial feature in the preset image.

19. The method according to claim 17, wherein the preset image comprises a third foreground object, the third foreground object is a person or an animal, and determining the first feature based on the preset image comprises:
determining the first feature based on skeletal posture information of the third foreground object in the preset image.

20. The method according to claim 18, wherein determining the first feature based on the skeletal posture information of the third foreground object in the preset image comprises:
determining the first feature based on the skeletal posture information and at least one of contour information and depth information of the third foreground object in the preset image.

21. The method according to any one of claims 1 to 9, wherein before displaying the first wallpaper and the second wallpaper, the method further comprises:
sending an image generation indication to a server in response to a first user operation, wherein the image generation indication comprises the preset image; and
receiving a plurality of images that are generated based on the preset image and sent by the server, and adding at least two of the plurality of images to a wallpaper library, wherein the at least two images comprise the first wallpaper and the second wallpaper.

22. The method according to claim 21, wherein the preset image comprises a third foreground object, the image generation indication further comprises description information of the third foreground object, and the description information of the third foreground object is used by the server to determine an image style type corresponding to the plurality of to-be-generated images.

23. The method according to claim 22, wherein the image generation indication further comprises scene information corresponding to a user upon triggering of the image generation indication, and the scene information is used by the server to generate the plurality of images.

24. The method according to any one of claims 8 to 23, wherein the image style type comprises at least one of a dopamine style, an ancient style, a retro style, a cartoon style, a light and shadow photography style, and an underwater style.

25. The method according to any one of claims 1 to 24, wherein the first wallpaper is generated based on scene information upon generation of the first wallpaper, and/or the second wallpaper is generated based on scene information upon generation of the second wallpaper.

26. The method according to claim 25, wherein the scene information comprises at least one of time information, location information, weather information, a motion status, and user status information.

27. The method according to any one of claims 1 to 26, wherein the first wallpaper display event and the second wallpaper display event are specifically either screen-on event or incoming call event.

28. The method according to claim 27, wherein if the first wallpaper display event and the second wallpaper display event are screen-on events, the preset image is a preset wallpaper that is set on a display.

29. The method according to claim 27, wherein if the first wallpaper display event and the second wallpaper display event are incoming call events, the preset image is a contact image corresponding to a contact of the incoming call events.

30. The method according to claim 27, wherein the first wallpaper display event is a first screen-on event triggered by a tap operation, and before displaying the first wallpaper when the first wallpaper display event is detected, the method further comprises:
displaying the preset image in an always-on display state; and
displaying the first wallpaper when the first wallpaper display event is detected comprises:
displaying a wallpaper switching animation when the first wallpaper display event is detected, and displaying the first wallpaper when the wallpaper switching animation ends, wherein the wallpaper switching animation is generated based on the preset image and the first wallpaper.

31. The method according to claim 30, wherein before displaying the wallpaper switching animation when the first wallpaper display event is detected, and displaying the first wallpaper when the wallpaper switching animation ends, the method further comprises:
if a posture of the third foreground object in the preset image is different from a posture of the first foreground object, determining a posture animation parameter based on the posture of the third foreground object and the posture of the first foreground object; and
generating the wallpaper switching animation based on the posture animation parameter.

32. An electronic device, wherein the electronic device comprises a memory, a processor, and a program that is stored in the memory and that is executable on the processor, and when the processor executes the program, steps of the method according to any one of claims 1 to 31 are implemented.

33. A readable storage medium, wherein the readable storage medium stores a program, and when the program is executed by a processor, steps of the method according to any one of claims 1 to 31 are implemented.

34. An image processing system, wherein the system comprises an electronic device and a server;
the electronic device is configured to send an image generation indication to the server in response to a first user operation, wherein the image generation indication comprises the preset image;
the server is configured to: generate a plurality of images based on the preset image, and send the plurality of images to the electronic device;
the electronic device is further configured to: receive the plurality of images sent by the server, and add at least two of the plurality of images to a wallpaper library, wherein the at least two images comprise a first wallpaper and a second wallpaper, the first wallpaper comprises a first foreground object and a first background picture, the second wallpaper comprises a second foreground object and a second background picture, a first feature of the first foreground object is the same as a second feature of the second foreground object, the first feature and the second feature are features in a first feature dimension, and the first background picture is different from the second background picture;
the electronic device is further configured to display the first wallpaper when a first wallpaper display event is detected; and
the electronic device is further configured to display the second wallpaper when a second wallpaper display event is detected.

35. The system according to claim 34, wherein the preset image comprises a third foreground object, the image generation indication further comprises description information of the third foreground object, and the description information of the third foreground object is used by the server to determine an image style type corresponding to the plurality of to-be-generated images.

36. The method according to claim 34, wherein the image generation indication further comprises scene information corresponding to a user upon triggering of the image generation indication, and the scene information is used by the server to generate the plurality of images.
